(19)

Europäisches
Patentamt
European
Patent Office
Office européen
des brevets

(11) **EP 4 351 244 A1**

(12) **EUROPEAN PATENT APPLICATION**
published in accordance with Art. 153(4) EPC

(43) Date of publication:
**10.04.2024  Bulletin 2024/15**

(21) Application number: **22810915.3**

(22) Date of filing: **08.03.2022**

(51) International Patent Classification (IPC):
**H04W 72/04** *(2009.01)*       **H04W 72/12** *(2009.01)*
**H04W 84/12** *(2009.01)*

(52) Cooperative Patent Classification (CPC):
**H04W 72/04; H04W 72/12; H04W 84/12;**
Y02D 30/70

(86) International application number:
**PCT/JP2022/010003**

(87) International publication number:
**WO 2022/249634 (01.12.2022 Gazette 2022/48)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **27.05.2021  JP 2021089176**

(71) Applicant: **Panasonic Intellectual Property
Corporation
of America
Torrance, CA 90504 (US)**

(72) Inventors:
• **TAKATA, Tomofumi**
  **Kadoma-shi, Osaka 571-0057 (JP)**
• **IWAI, Takashi**
  **Kadoma-shi, Osaka 571-0057 (JP)**
• **URABE, Yoshio**
  **Kadoma-shi, Osaka 571-0057 (JP)**

(74) Representative: **Grünecker Patent- und
Rechtsanwälte
PartG mbB
Leopoldstraße 4
80802 München (DE)**

(54) **TERMINAL, BASE STATION, AND COMMUNICATION METHOD**

(57)     This terminal comprises: a receiving circuit which receives control information including information regarding a timing of a frequency resource for performing reception processing, among a plurality of frequency resources used for the frequency-multiplexed transmission of a plurality of downlink signals; and a control circuit which controls the reception processing on the basis of the control information.

200

FIG. 9

**Description**

Technical Field

The present disclosure relates to a terminal, a base station, and a communication method.

Background Art

The Institute of Electrical and Electronics Engineers (IEEE) is promoting the studies on the standard IEEE 802.11be (hereinafter also referred to as "11be") which is a successor standard of the standard IEEE 802.11ax (hereinafter also referred to as "11ax") and is intended for next-generation wireless local area networks (LANs). IEEE 802.11ax is also referred to as High Efficiency (HE), and IEEE 802.11be is also referred to as Extreme High Throughput (EHT).

Citation List

Non-Patent Literature

NPL 1
IEEE P802.11be/D0.4
NPL 2
IEEE P802.11ax/D8.0
NPL 3
IEEE 802.11-21/0259r4, "Proposed Draft Specification for Trigger frame for EHT"
NPL 4
IEEE 802.11-20/1843r2, "Low-Latency Triggered TWT"
NPL 5
IEEE 802.11-21/0462r5, "Restricted TWT Spec Text"

Summary of Invention

There is a room for further study on a technique that allows a base station to recognize a requirement of data to be transmitted by a terminal. In the present disclosure, a base station may be referred to as an access point (AP), and a terminal may be referred to as a station (STA) or a non-AP STA.

A non-limiting exemplary embodiment of the present disclosure facilitates providing a terminal, a base station, and a communication method that allow a base station to recognize a requirement of data to be transmitted by a terminal.

A terminal according to an embodiment of the present disclosure includes: reception circuitry, which, in operation, receives a control signal; and control circuitry, which, in operation, controls a transmission method of a response signal to reception of the control signal, based on a buffer status of data satisfying a predetermined requirement.

It should be noted that general or specific embodiments may be implemented as a system, an apparatus, a method, an integrated circuit, a computer program, a storage medium, or any selective combination thereof.

According to one exemplary embodiment of the present disclosure, a base station can recognize a requirement of data to be transmitted by a terminal.

Additional benefits and advantages of the disclosed exemplary embodiments will become apparent from the specification and drawings. The benefits and/or advantages may be individually obtained by the various embodiments and features of the specification and drawings, which need not all be provided in order to obtain one or more of such benefits and/or advantages.

Brief Description of Drawings

FIG. 1 is a diagram illustrating an example of a Trigger frame;
FIG. 2 is a diagram illustrating an example of a Common Info field (Common Info field, EHT variant);
FIG. 3 is a diagram illustrating an example of a Trigger type;
FIG. 4 is a diagram illustrating an example of a User Info field of a Null Data Packet (NDP) Feedback Report Poll (NFRP);

FIG. 5 is a diagram illustrating an example of a Feedback Type subfield;

FIG. 6 is a diagram illustrating an example of a tone set index of a Resource unit (RU);

FIG. 7 is a diagram illustrating an example of a Pmatrix;

FIG. 8 is a block diagram illustrating a configuration example of a portion of an AP;

FIG. 9 is a block diagram illustrating a configuration example of a portion of a terminal;

FIG. 10 is a block diagram illustrating a configuration example of an AP according to Embodiment 1;

FIG. 11 is a block diagram illustrating a configuration example of a terminal according to Embodiment 1;

FIG. 12 is a diagram illustrating an example of a Traffic indicator (TID);

FIG. 13 is a diagram illustrating an example of a User info field of the NFRP according to a first latency requirement control method;

FIG. 14 is a diagram illustrating an example of the User info field (bitmap configuration) of the NFRP according to the first latency requirement control method;

FIG. 15 is a diagram illustrating an example of the User info field of the NFRP according to a second latency requirement control method;

FIG. 16 is a diagram illustrating an example of the User info field of the NFRP according to a third latency requirement control method;

FIG. 17 is a diagram illustrating an example of a Feedback type;

FIG. 18 is a diagram illustrating an example of the Feedback type (in the case of specifying multiple steps);

FIG. 19 is a diagram illustrating an example of Special user info;

FIG. 20 is a diagram illustrating an example of a Feedback type (notification about details of a resource request);

FIG. 21 is a diagram illustrating an example of comparison of a bit location between the Special user info and the user info;

FIG. 22 is a diagram illustrating an example of a buffer for each TID;

FIG. 23 is a diagram illustrating an example configuration of an NDP Feedback Report Parameter Set element;

FIG. 24 is a diagram illustrating an example of the User info field;

FIG. 25 is a diagram illustrating an example of resource division;

FIG. 26 is a block diagram illustrating a configuration example of an AP according to Embodiment 2;

FIG. 27 is a block diagram illustrating a configuration example of a terminal according to Embodiment 2;

FIG. 28 is a diagram illustrating an example of the Pmatrix (in the case where the number of symbols is two);

FIG. 29 is a diagram illustrating an example of the Pmatrix (in the case where the number of symbols is four);

FIG. 30 is a diagram illustrating an example of the Pmatrix (in the case where the number of symbols is six);

FIG. 31 is a diagram illustrating an example of the Pmatrix (combination with other information);

FIG. 32 is a diagram illustrating an example of a Tone location;

FIG. 33 is a diagram for describing a Restricted Target Wakeup Time (TWT) control method;

FIG. 34 is a diagram illustrating an example of a Restricted TWT Traffic info field;

FIG. 35 is a block diagram illustrating a configuration example of a terminal according to Embodiment 3; and

FIG. 36 is a diagram illustrating an example of a control sequence according to Embodiment 3.

Description of Embodiments

Each embodiment of the present disclosure will be described in detail below with reference to the drawings.

The introduction of uplink OFDMA (Orthogonal Frequency-Division Multiple Access) is defined in 11ax (HE). For example, a base station (for example, an AP) transmits a control signal (hereinafter, referred to as a "Trigger frame") for indicating transmission of an uplink OFDMA signal to a plurality of terminals (for example, STAs) accommodated by the AP.

The reuse of the Trigger frame of 11ax (HE) as the control signal for indicating transmission of an uplink OFDMA signal for a plurality of terminals is agreed also in 11be (EHT) (see NPLs 1 and 3, for example).

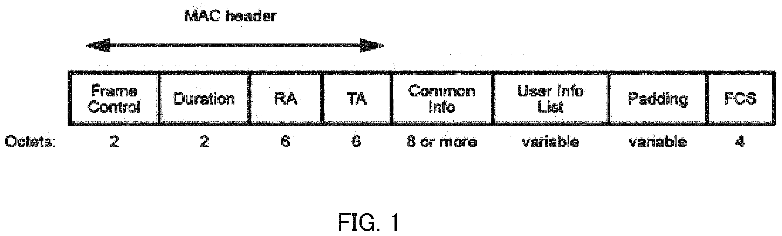

As illustrated in FIG. 1, for example, the Trigger frame includes a Common Info field which includes information (may be referred to as terminal common information) common to a plurality of terminals multiplexed by OFDMA, and a User Info List constituted by a plurality of User Info fields which include information (terminal specific information) unique to each terminal (see NPLs 1, 2, and 3, for example).

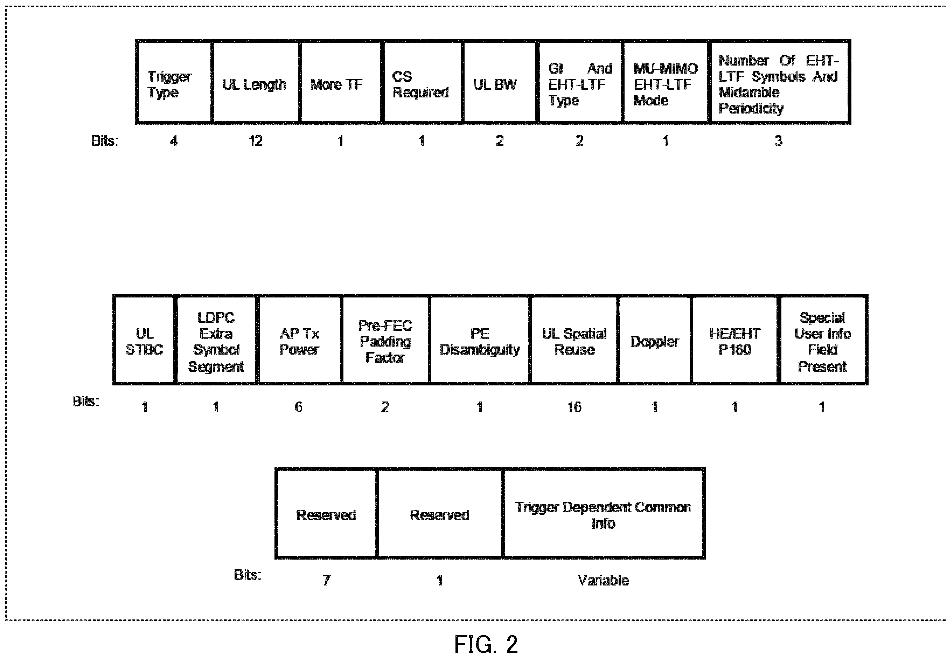

FIG. 2 illustrates an example of the Common Info field (Common Info field, EHT variant) that is being studied in EHT. A Trigger Type subfield of the Common Info field indicates a type of the Trigger frame (type of a signal that an AP causes terminals to transmit).

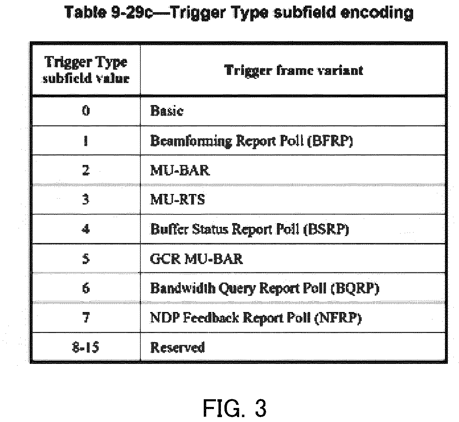

11ax defines types (for example, value = 0 to 7) illustrated in FIG. 3 as the Trigger Type (see NPL 2, for example). Note that in FIG. 3, values = 8 to 15 are yet-to-be-defined (reserved) values. In addition, for example, a Trigger Dependent Common Info subfield includes common information dependent on the Trigger type.

For example, STAs that support EHT are capable of transmitting a TB-PPDU (Trigger-Based Physical Protocol Data Unit), which is an example of a response signal to the Trigger frame, in either format of HE and EHT. For example, an AP can use the common info field or the like of the Trigger frame to indicate in which format the STAs transmit the TB-PPDU.

When the Trigger frame is transmitted to the EHT terminals, for example, a Special user info field is provided which is the User info field in which a special AID (Association ID, for example, AID = 2007) is set. The Special user info field notifies the EHT terminals of information common to the terminals such as EHT uplink bandwidth information (see NPL 1, for example).

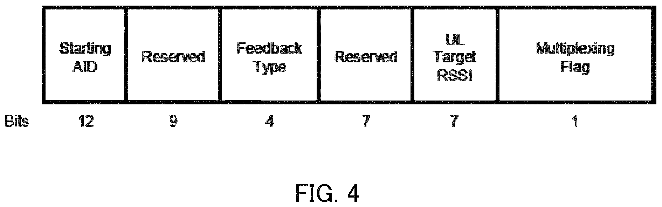

When the value of the Trigger type subfield indicates 7 (NFRP), the format of the User info field has a configuration illustrated in FIG. 4, for example (see NPL 2, for example). Note that NFRP is an abbreviation for NDP Feedback Report Poll, and NDP is an abbreviation for Null Data Packet.

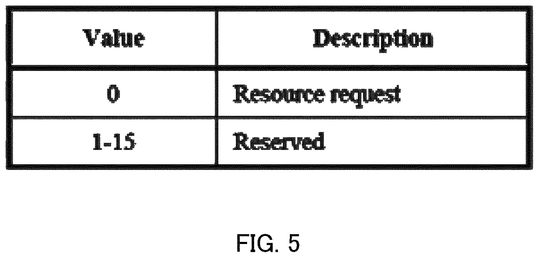

In FIG. 4, for example, values (for example, value = 0 to 15) illustrated in FIG. 5 are settable in a Feedback Type subfield. When the value of the Feedback Type subfield is 0, a response signal to the Trigger frame is used for the purpose of a Resource request. The values from 1 to 15 are reserved.

That is, by using the response signal to the Trigger frame, the terminals can notify (or indicate for) the AP of whether or not data to be transmitted in the uplink is held therein. For example, terminals holding AIDs in a range from an AID indicated by a Starting AID subfield to Starting AID + $N_{STA}$ -1 transmit an NDP as the response signal to the Trigger frame (NFRP). $N_{STA}$ is represented by following equation 1.

$$N_{STA} = 18 \times 2^{BW} \times (\text{Multiplexing Flag} + 1) \qquad ... (1)$$

The value of the BW is indicated by, for example, an UL BW (bandwidth) subfield of the Common Info field illustrated in FIG. 2, and can be a value of 0, 1, 2, or 3, for example. For example, 0 corresponds to a bandwidth of 20 MHz, 1 corresponds to a bandwidth of 40 MHz, 2 corresponds to a bandwidth of 80 MHz, and 3 corresponds to a bandwidth of 80 + 80 MHz or 160 MHz. The Multiplexing Flag is indicated in the User info field illustrated in FIG. 4, for example, and represents whether or not multiplexing of multiple terminals is applied. For example, the Multiplexing Flag = 1 indicates that multiplexing of a plurality of terminals is applied.

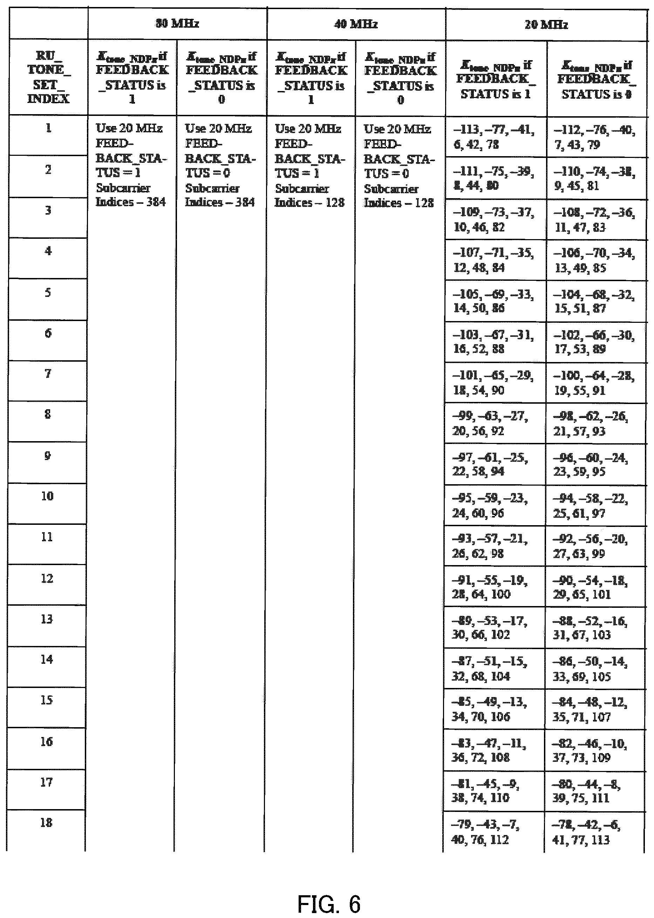

For example, a terminal to transmit an NDP sets FEEDBACK_STATUS = 1 in the case of holding data more than or equal to a buffer threshold value (also referred to as Resource request buffer threshold exponential) indicated by a signal such as a beacon or sets FEEDBACK_STATUS = 0 in the case of not holding data, and transmits the NDP in which an HE-LTF (long training field) or EHT-LTF is arranged at a tone location (in other words, a frequency resource) illustrated in FIG. 6.

For example, a terminal with the AID indicated by the Starting AID uses frequency resources of candidate tone locations for RU_TONE_SET_INDEX = 1 to transmit the NDP. In addition, for example, a terminal with the AID indicated by the Starting AID + 1 uses frequency resources of candidate tone locations for RU_TONE_SET_INDEX = 2 to transmit the NDP.

When the Multiplexing Flag subfield (also referred to as a Number Of Spatially Multiplexed Users subfield) is 1, for example, two terminals may use (in other words, share) resources of one RU_TONE_SET_INDEX. In this case, for example, the NDPs of the terminals are orthogonalized by using a Pmatrix by which the HE-LTF or EHT-LTF is multiplied. Note that the number of symbols of the HE-LTF is fixed to two in HE.

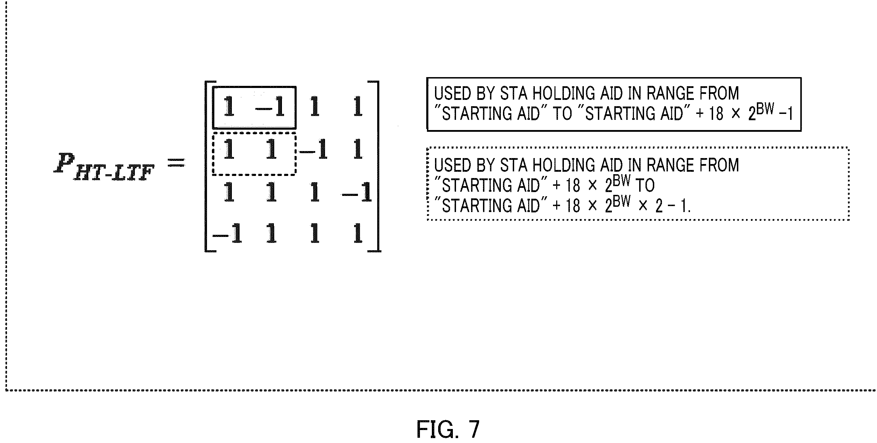

For example, as illustrated in FIG. 7, STAs holding AIDs in a range from the Starting AID to the Starting AID + $18 \times 2^{BW}$ -1 multiply the HE-LTF by a Pmatrix [1 -1], and STAs holding AIDs in a range from the Starting AID + $18 \times 2^{BW}$ to the Starting AID + $18 \times 2^{BW} \times 2$ - 1 multiply the HE-LTF by a Pmatrix [1 1]. [1 -1] and [1 1] are examples of mutually orthogonal sequences (patterns).

In 11be (EHT), improvement of TWT (Target Wakeup Time) or the like is also studied to handle data with a high latency requirement (also referred to as low latency traffic) (see NPLs 4 and 5, for example).

However, the Resource request using the NFRP does not allow the AP to determine a latency requirement of data to be transmitted by a terminal. For this reason, the AP cannot determine the priority of resource allocation in accordance with the latency requirement, for the terminal holding data to be transmitted in the uplink. Therefore, the terminal holding the data with the high latency requirement (low latency traffic) may fail to transmit the data within a predetermined time.

Non-limiting exemplary embodiments of the present disclosure allow an AP to recognize a terminal holding data with the high latency requirement (in other words, low latency data). Thus, the AP can preferentially allocate a resource for data transmission to the terminal, and the terminal can transmit the data within a time of an allowable latency according to the latency requirement.

<Embodiment 1>

<Configuration of Radio Communication System>

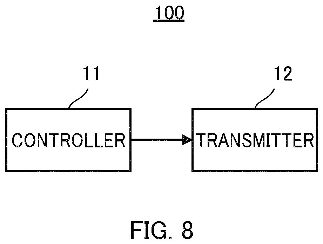

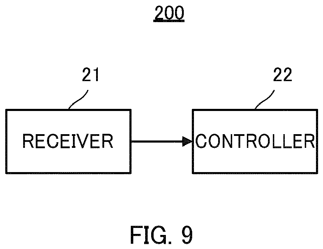

A radio communication system according to the present embodiment may include, for example, AP 100 illustrated in FIG. 8 and terminal 200 illustrated in FIG. 9. In the radio communication system, two or more APs 100 and two or more terminals 200 may be present.

For example, AP 100 may transmit, to terminal 200, a Trigger frame for indicating uplink OFDMA transmission. Terminal 200 may receive the Trigger frame, and transmit an uplink OFDMA signal to AP 100 by using a resource indicated by the received Trigger frame.

Note that AP 100 may be, for example, an AP that supports EHT and has backward compatibility with HE (for example, an AP that also supports HE).

In addition, terminal 200 may be, for example, either an HE terminal or an EHT terminal. For example, AP 100 may transmit one Trigger frame to a plurality of terminals 200 of different versions of the wireless LAN standard (for example, either HE or EHT), and may receive an uplink OFDMA signal from each of terminals 200. For example, AP 100 may separate and decode the uplink signal of the resource allocated to each of terminals 200 from a reception signal.

FIG. 8 is a block diagram illustrating a configuration example of a portion of AP 100 according to one exemplary embodiment of the present disclosure. In AP 100 illustrated in FIG. 8, for example, controller (or control circuit) 11 sets requirement information (for example, a TID, an AC, or a Discard age to be described later) in a control signal (for example, a trigger frame) for requesting terminal 200 to transmit a response signal. For example, this information may be used by terminal 200 to control (or determine) a transmission method of the response signal, based on a buffer status of transmission data satisfying a predetermined requirement. For example, transmitter (or transmission circuit) 12 transmits the control signal to terminal 200. The requirement may be, for example, a requirement (hereinafter may be referred to as a "latency requirement") related to a latency for data to be transmitted by terminal 200.

FIG. 9 is a block diagram illustrating a configuration example of a portion of terminal 200 according to one exemplary embodiment of the present disclosure. In terminal 200 illustrated in FIG. 9, for example, receiver (or reception circuit) 21 receives the control signal. For example, controller (or control circuit) 22 controls (or determines) a transmission method of a response signal (for example, a resource request or an NDP) to reception of the control signal, based on a buffer status of data satisfying a predetermined requirement (for example, a latency requirement).

In a non-limiting exemplary embodiment of the present disclosure, a description will be given of, for example, a method of determining a buffer holding status (for example, FEEDBACK_STATUS = 0 or 1) to be responded (or fed back) to AP 100 by terminal 200 in a resource request in accordance with the latency requirement.

<Configuration Example of AP 100>

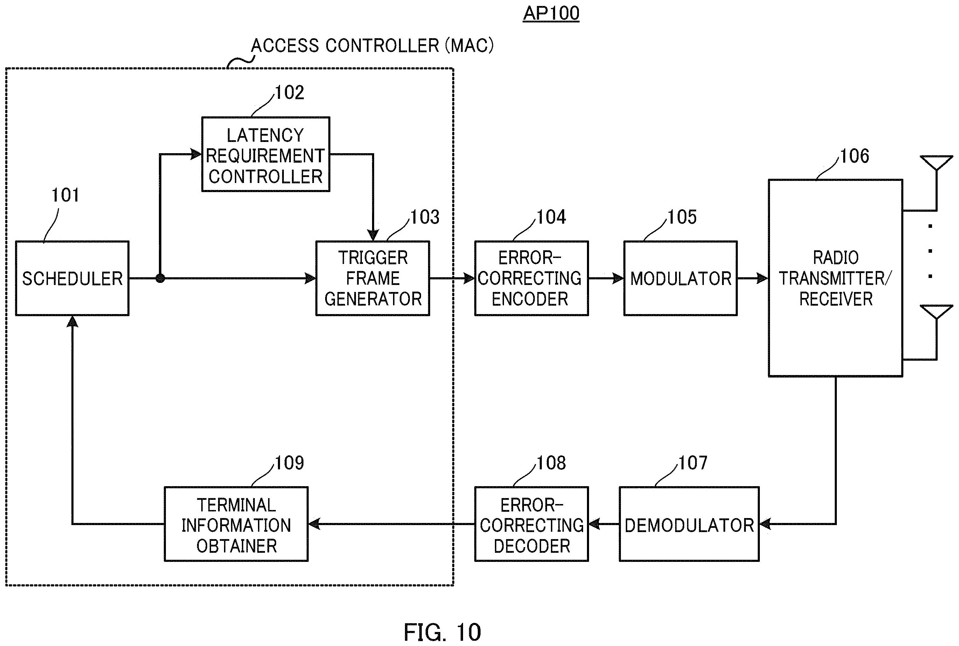

FIG. 10 is a block diagram illustrating a configuration example of AP 100 according to the present embodiment. AP 100 illustrated in FIG. 10 may include, for example, scheduler 101, latency requirement controller 102, Trigger frame generator 103, error-correcting encoder 104, modulator 105, radio transmitter/receiver 106, demodulator 107, error-correcting decoder 108, and terminal information obtainer 109.

For example, at least one of scheduler 101, latency requirement controller 102, Trigger frame generator 103, and terminal information obtainer 109 may be included in an access controller (for example, a Medium Access Control (MAC) processor).

For example, at least one of scheduler 101, latency requirement controller 102, Trigger frame generator 103, error-correcting encoder 104, modulator 105, demodulator 107, error-correcting decoder 108, and terminal information obtainer 109 illustrated in FIG. 10 may be included in controller 11 illustrated in FIG. 8. In addition, for example, radio transmitter/receiver 106 illustrated in FIG. 10 may be included in transmitter 12 illustrated in FIG. 8.

For example, based on terminal information (such as a version, radio quality information for each predetermined band, or buffer information of terminal 200, for example) output from terminal information obtainer 109, scheduler 101 determines the Trigger type corresponding to the type of the uplink response signal and the radio resource (such as an allocated band or a target reception level, for example) of the uplink response signal of each terminal.

For example, when triggering an NFRP, scheduler 101 determines the Starting AID and the multiplexing Flag for the STA that transmits the uplink response signal (in other words, whether or not to multiplex the LTFs of HE or EHT of multiple terminals 200 by the Pmatrix). For example, scheduler 101 outputs the determined Trigger type and the radio resource information of each of terminals 200 to Trigger frame generator 103.

For example, latency requirement controller 102 determines the latency requirement of data accumulated in the buffer and to be responded by the resource request. The latency requirement is controlled by, for example, a TID (Traffic Indicator). Details of the latency requirement will be described later. For example, latency requirement controller 102 outputs the determined latency requirement information to Trigger frame generator 103.

For example, Trigger frame generator 103 generates the Common Info field by using the Trigger type indicated by scheduler 101. Trigger frame generator 103 also generates the User Info field by using a predetermined format in accordance with the Trigger type. If the Trigger type is the NFRP, the User Info field may include the Starting AID subfield and the multiplexing Flag subfield indicated by scheduler 101, for example.

In addition, for example, Trigger frame generator 103 generates the User Info field, based on the latency requirement information input from latency requirement controller 102. Note that details of the User Info field will be described later. If the Trigger type is the NFRP, even a Trigger frame for EHT terminals may be configured not to include the Special user info field. For example, Trigger frame generator 103 outputs the generated Trigger frame to error-correcting encoder 104.

For example, error-correcting encoder 104 receives an input of a transmission data signal including the Trigger frame, performs error-correcting encoding on the input signal, and outputs the encoded signal to modulator 105.

For example, modulator 105 performs modulation processing on the signal input from error-correcting encoder 104, and outputs the modulated data signal to radio transmitter/receiver 106.

Note that if the modulated data signal is an OFDM (Orthogonal Frequency Division Multiplexing) signal, AP 100 (for example, modulator 105) may map the modulated signal to a predetermined frequency resource, perform IFFT (Inverse Fast Fourier Transform) processing to convert the signal into a time-domain waveform, and add a CP (Cyclic Prefix) to form the OFDM signal.

For example, radio transmitter/receiver 106 performs predetermined radio transmission processing such as D/A conversion and up-conversion to a carrier frequency on the modulated signal output from modulator 105, and transmits the signal having undergone the radio transmission processing to terminal 200 via antennas. In addition, for example, radio transmitter/receiver 106 receives a signal transmitted from terminal 200 via the antennas, performs radio reception processing such as down-conversion to a baseband and A/D conversion on the received signal, and outputs the signal having undergone the radio reception processing to demodulator 107.

For example, demodulator 107 performs demodulation processing on the input signal from radio transmitter/receiver 106, and outputs the obtained signal to error-correcting decoder 108. Note that if the input signal is an OFDM signal, AP 100 (for example, demodulator 107) may perform CP removal processing and Fast Fourier transform (FFT) processing on the input signal.

For example, error-correcting decoder 108 decodes the signal input from demodulator 107 to obtain a reception data signal transmitted from terminal 200. For example, if the decoded reception data includes the above-described terminal information, error-correcting decoder 108 outputs the decoded data to terminal information obtainer 109.

For example, terminal information obtainer 109 obtains the terminal information (such as the version or the radio quality information for each predetermined band of the terminal) from the decoded data output from error-correcting decoder 108, and outputs the terminal information to scheduler 101. In addition, if the decoded data is a response signal (NDP) to the NFRP, terminal information obtainer 109 obtains the terminal information (for example, buffer information) from the tone location of the HE-LTF or EHT-LTF, and outputs the terminal information to scheduler 101, for example.

<Configuration Example of Terminal 200>

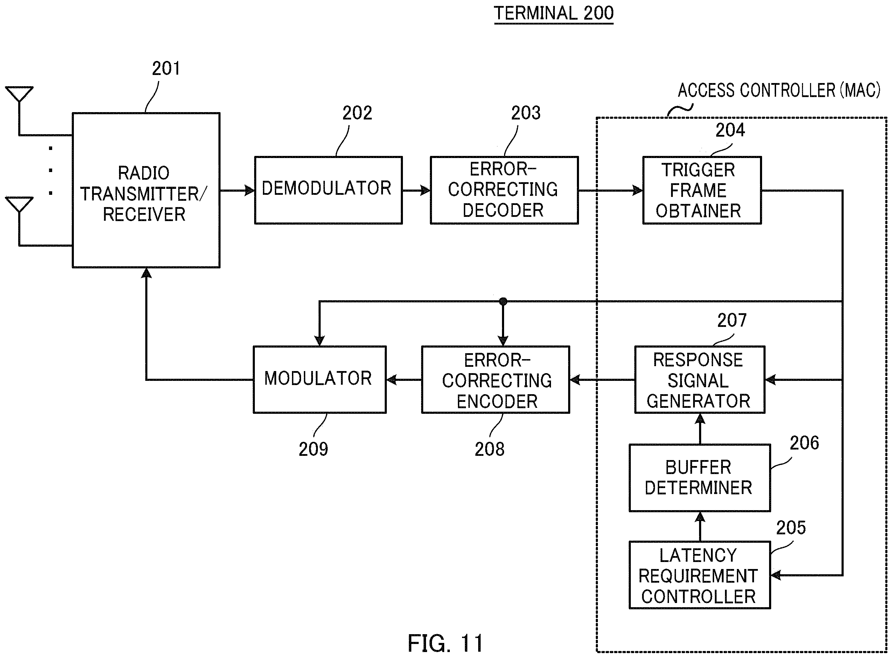

FIG. 11 is a block diagram illustrating a configuration example of terminal 200 according to the present embodiment. Terminal 200 illustrated in FIG. 11 may include, for example, radio transmitter/receiver 201, demodulator 202, error-correcting decoder 203, Trigger frame obtainer 204, latency requirement controller 205, buffer determiner 206, response signal generator 207, error-correcting encoder 208, and modulator 209.

At least one of Trigger frame obtainer 204, latency requirement controller 205, buffer determiner 206, and response signal generator 207 may be included in an access controller (for example, a MAC processor), for example.

At least one of demodulator 202, error-correcting decoder 203, Trigger frame obtainer 204, latency requirement controller 205, buffer determiner 206, response signal generator 207, error-correcting encoder 208, and modulator 209 illustrated in FIG. 11 may be included in controller 22 illustrated in FIG. 9, for example. In addition, radio transmitter/receiver 201 illustrated in FIG. 11 may be included in receiver 21 illustrated in FIG. 9, for example.

For example, radio transmitter/receiver 201 receives a reception signal via antennas, performs radio reception processing such as down-conversion and A/D conversion on the reception signal, and outputs the obtained reception signal to demodulator 202.

For example, demodulator 202 performs demodulation processing on the reception data input from radio transmitter/receiver 201, and outputs the demodulated signal to error-correcting decoder 203. Note that if the input signal is an OFDM signal, terminal 200 (for example, demodulator 202) may perform CP removal processing and FFT processing on the input signal, for example.

For example, error-correcting decoder 203 decodes the demodulated signal input from demodulator 202, and outputs the decoded signal as a reception data signal. In addition, for example, error-correcting decoder 203 outputs the Trigger frame in the reception data signal to Trigger frame obtainer 204.

For example, Trigger frame obtainer 204 extracts information of the Common Info field from the Trigger frame output from error-correcting decoder 203, and obtains the terminal common information (such as the type of data to be transmitted or the duration of the uplink signal, for example) for use in generating an uplink signal, including the type of an uplink response signal.

For example, Trigger frame obtainer 204 extracts the User info List (such as the User Info fields, for example) from the Trigger frame, and performs reception processing of the User info fields, based on the terminal common information (including the Trigger type, for example) obtained from the information of the Common Info field. For example, Trigger frame obtainer 204 then obtains information for use in generating a response signal from the Common Info and User info fields, and outputs the obtained information to response signal generator 207 and latency requirement controller 205.

For example, latency requirement controller 205 obtains latency requirement information (for example, buffer type information to be responded via the resource request) included in the User info field, and outputs the obtained latency requirement information to buffer determiner 206. The latency requirement information is, for example, a TID.

Note that if the User info field does not include the latency requirement information, handling may be performed without the latency requirement information or the latency requirement information defined in specifications or the like or the latency requirement information which terminal 200 is notified of by a beacon or the like may be output to buffer determiner 206. Details of the latency requirement information will be described later. The term "notify" may be read as "indicate".

For example, buffer determiner 206 determines the presence or absence of data in the buffer in accordance with the latency requirement information. For example, when the latency requirement information is the TID, buffer determiner 206 determines whether or not data with the specified TID that is more than or equal to a threshold value (for example, Resource request buffer threshold exponential) is held in the buffer, and outputs buffer holding information (FEEDBACK_STATUS) to response signal generator 207.

The buffer threshold value may be indicated for terminal 200 by, for example, an NDP Feedback Report Parameter Set element included in a signal such as a beacon. Note that when buffer determiner 206 is not notified of the latency requirement information from latency requirement controller 205, buffer determiner 206 may determine the buffer holding information, based on an amount of all data in the buffer irrespective of the latency requirement, similarly to control in HE, for example. Details of the operation of buffer determiner 206 will be described later.

For example, response signal generator 207 generates data having a predetermined type and a predetermined size, based on the terminal common information and the terminal specific information from Trigger frame obtainer 204, and outputs the data to error-correcting encoder 208. If the Trigger type is the NFRP, response signal generator 207 may check whether or not AIDs indicated by the Starting AID or the like include the AID held by terminal 200, for example.

As a result of the check, if the indicated AIDs include the AID held by terminal 200, response signal generator 207 may generate the NDP including the HE-LTF or EHT-LTF, based on the buffer holding information (for example, FEEDBACK_STATUS) input from buffer determiner 206.

In addition, for example, response signal generator 207 multiplies the HE-LTF or EHT-LTF by the Pmatrix in accordance with the Multiplexing Flag included in the terminal specific information. Note that terminal 200 may be notified of which format of HE and EHT is used to generate the response signal by the Common info (or the Common info and the Special user info) of the Trigger frame, for example. In addition, if the NFRP is indicated, the response signal may be generated in the format of HE. The generated response signal is output to, for example, error-correcting encoder 208.

For example, error-correcting encoder 208 receives an input of the response signal from response signal generator 207, performs error-correcting encoding on the response signal which is transmission data, based on the terminal common information and the terminal specific information from Trigger frame obtainer 204, and outputs the encoded signal to modulator 209.

For example, modulator 209 modulates the signal input from error-correcting encoder 208, and outputs the modulated signal to radio transmitter/receiver 201, based on the terminal common information and the terminal specific information from Trigger frame obtainer 204. Note that when the modulated signal is an OFDM signal, terminal 200 (for example, modulator 209) maps the modulated signal to the frequency resource, performs IFFT processing, and adds the CP to form the OFDM signal.

Radio transmitter/receiver 201 performs radio transmission processing such as up-conversion and D/A conversion on the input signal from modulator 209, and transmits the signal having undergone the radio transmission processing via the antennas.

<Operation Example of AP 100 and Terminal 200>

An operation example of AP 100 and terminal 200 according to the present embodiment will be described next.

<Operation Example of Latency Requirement Controller 102 (205)>

First to third latency requirement control methods will be described as operation examples of latency requirement controller 102 (205) first. Any one of the first to third latency requirement control methods may be applied to latency requirement controller 102 (205).

Control of the buffer status responded by terminal 200 to AP 100 via the Resource request, based on the latency requirement information (such as the TID, the AC (Access category), or the Discard age, for example) allows AP 100 to recognize the latency requirement of data held by terminal 200.

Thus, AP 100 can preferentially allocate a resource to terminal 200 holding the data with the high latency requirement (also referred to as low latency data), for example. This allows terminal 200 holding the data with the high latency requirement to transmit the data within a time of the allowable latency by using the preferentially allocated resource.

Note that latency requirement control is not limited to those based on the TID, the AC, and the Discard age respectively presented in the first to third latency requirement control methods described below. Other information representing the latency requirement may be used.

<First Latency Requirement Control Method>

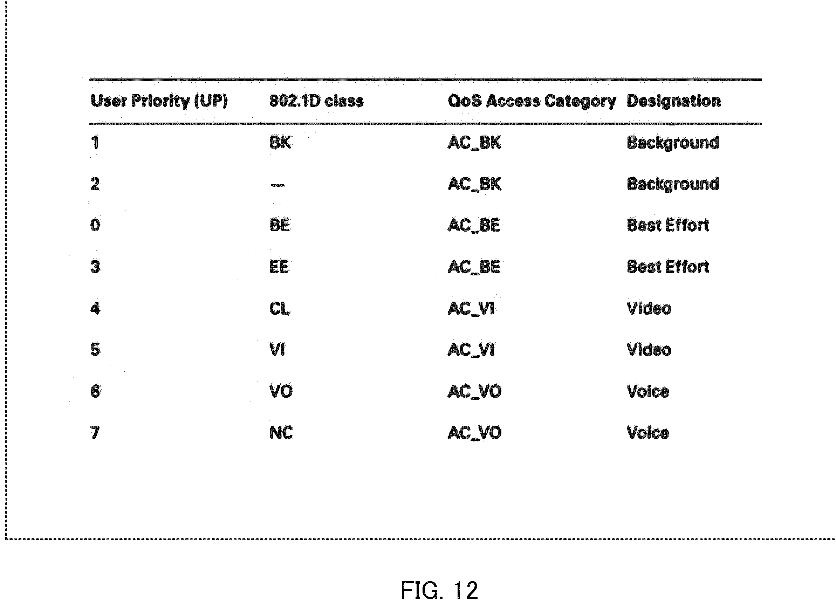

Latency requirement control may be performed based on the TID, for example. The TID is defined as illustrated in FIG. 12, for example. In FIG. 12, for example, User Priority corresponds to the TID. The TID greater than or equal to a predetermined value indicates that the latency requirement is high, and the TID smaller than the predetermined value indicates that the latency requirement is low. For example, when the predetermined value is 4, TID = 0, 1, 2, or 3 indicates that the latency requirement is low, and TID = 4, 5, 6, or 7 indicates that the latency requirement is high.

Note that a value greater than 7 may be newly provided for the TID, and the TID greater than or equal to 7 may indicate that the latency requirement is high.

The control based on the TID can implement more detailed latency requirement control than control based on the AC such as the second latency requirement control method described later.

<Second Latency Requirement Control Method>

Latency requirement control may be performed based on the AC, for example. There are four types of AC, for example, AC_BK, AC_BE, AC_VI, and AC_VO. AC_BK represents an AC for traffic whose traffic type is background. AC_BE represents an AC for which traffic type is best effort. AC_VI represents an AC for traffic whose traffic type is video. AC_VO represents an AC for traffic whose traffic type is voice.

The latency requirement (in other words, priority) tends to increase in an order of AC_BK, AC_BE, AC_VI, and AC_VO. Thus, for example, AC_BK is set to 0, AC_BE is set to 1, AC_VI is set to 2, and AC_VO is set to 3. The AC greater than or equal to a predetermined value indicates that the latency requirement is high, and the AC smaller than the predetermined value indicates that the latency requirement is low.

For example, when the predetermined value is 2, AC = 0 (AC_BK) and AC = 1 (AC_BE) may indicate that the latency requirement is low, and AC = 2 (AC_VI) and AC = 3 (AC_VO) may indicate that the latency requirement is high.

Note that a new AC may be provided (for example, 4 or greater), and the AC greater than or equal to 4 may indicate that the latency requirement is high. Since the AC tends to have a smaller number of numerical value candidates than the TID, latency requirement control based on the AC can implement control of the latency requirement with a smaller number of bits than the control based on the TID. Thus, an amount of control information can be effectively reduced.

<Third Latency Requirement Control Method>

Latency requirement control may be performed based on a time (also referred to as a Discard Age) up until an MSDU (MAC Service Data Unit) is discarded, for example.

For example, the Discard age less than or equal to a predetermined value [ms] may indicate that the latency requirement is high, and the Discard age greater than the predetermined value [ms] may indicate that the latency requirement is low. For example, when the predetermined value is 200 ms, the Discard age in a range from 0 to 200 ms may indicate that the latency requirement is high, and the Discard age greater than 200 ms may indicate that the latency requirement is low.

According to the latency requirement control based on the Discard age, the latency requirement can be controlled in a fine granularity (in order of ms) for each MSDU.

<Operation Example of Trigger frame Generator 103>

An operation example of Trigger frame generator 103 in AP 100 will be described next.

<First Trigger Frame Generation Method>

For example, Trigger frame generator 103 may set 0 (Resource request), which is an existing value, in the Feedback Type subfield, and indicate, in a part of the Reserved of the User info field of the Trigger frame, the buffer type which terminal 200 is to respond via a resource request.

Note that HE terminals 200 discard the information of the Reserved of the User info field. Thus, as in an operation in HE, HE terminals 200 may generate a Resource request, based on an amount of all data in the buffer irrespective of the latency requirement. In contrast, EHT terminals 200 may generate a Resource request, based on an amount of a specific type of data in the buffer in accordance with the value indicated by the User Info field.

As described above, the first Trigger frame generation method is applicable to an environment in which HE terminals 200 and EHT terminals 200 coexist.

An example configuration of the User info field will be presented next in relation to the first to third latency requirement control methods described in <Operation Example of Latency Requirement Controller 205>.

<In Case of First Latency Requirement Control Method>

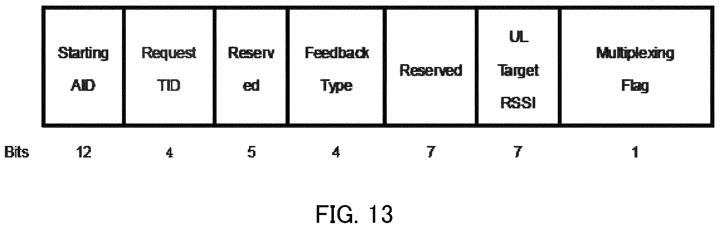

For example, as illustrated in FIG. 13, a TID (referred to as a Request TID) may be indicated in the User info field. FIG. 13 illustrates an example in which the Request TID is 4 bits long. However, the Request TID is not limited to this and may be 5 bits long or longer.

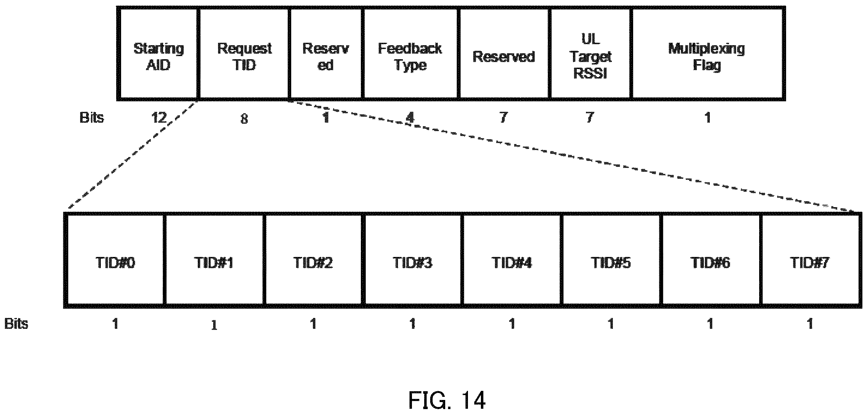

In addition, the configuration of the Request TID may be a bitmap configuration as illustrated in FIG. 14, for example. For example, when a condition for the high latency requirement is set as TID $\geq$ 4, 4 bits for TID#0 to 3 may be set to 0 and 4 bits for TID#4 to 7 may be set to 1.

<In Case of Second Latency Requirement Control Method>

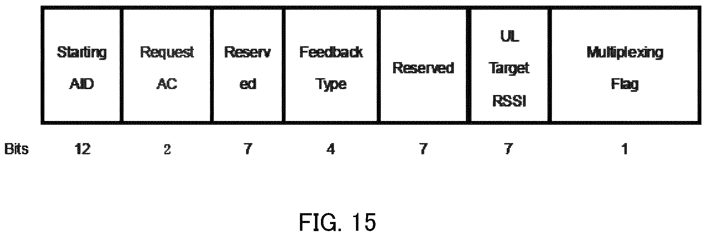

For example, as illustrated in FIG. 15, an AC (referred to as a Request AC) may be indicated in the User info field. FIG. 15 illustrates an example in which the Request AC is 2 bits long. However, the Request AC is not limited to this and may be 3 bits long or longer.

<In Case of Third Latency Requirement Control Method>

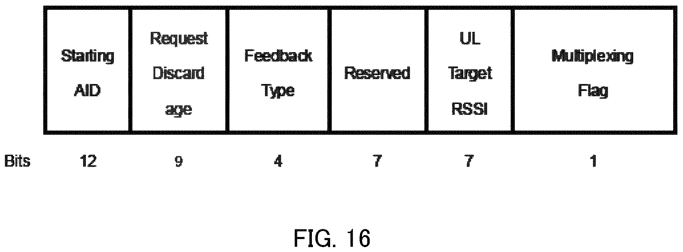

For example, as illustrated in FIG. 16, a Discard age (referred to as a Request Discard age) may be indicated in the User info field. FIG. 16 illustrates an example in which the Request Discard age is 9 bits long. However, the Request Discard age is not limited to this and may be 16 bits long by additionally using 7 bits of the remaining Reserved subfield. As the number of bits increases, the Discard age can be indicated with a finer granularity.

<Second Trigger Frame Generation Method>

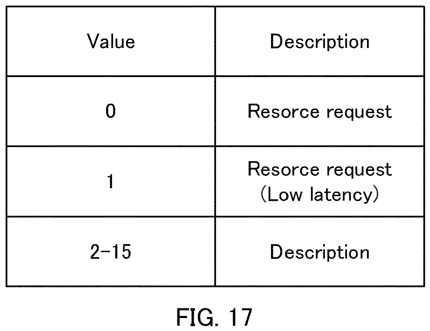

In a second Trigger frame generation method, for example, as illustrated in FIG. 17, a new setting value (for example, 1) is provided for the Feedback Type subfield. If the value of the Feedback Type subfield is 1, transmission of a Resource request based on the buffer with data of the high latency requirement is requested (or indicated). If the value of the Feedback Type subfield is 0, transmission of a Resource request based on the buffer with all the data is requested irrespective of the latency requirement.

As in the first Trigger frame generation method, for example, information of the latency requirement may be indicated for terminal 200 by using the Reserved subfield of the User info field also in the second Trigger frame generation method. If there is no specification, for example, terminal 200 may respond the resource request to AP 100, based on a condition about the latency requirement defined in the specifications in advance or information on the latency requirement which terminal 200 is notified of by a beacon or the like.

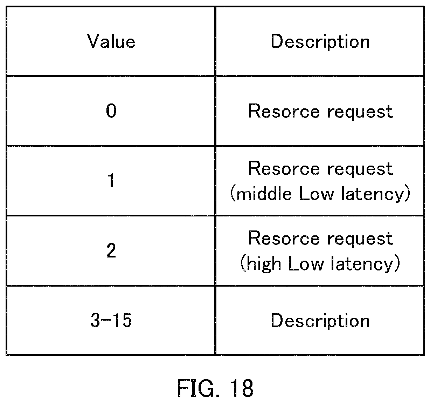

Note that the Feedback Type subfield may be divided into a plurality of steps (or levels) in accordance with the level of the latency requirement, for example, as illustrated in FIG. 18. For example, if the setting value is 1, a Resource request based on a buffer with data of a "middle" latency requirement or higher may be requested. If the setting value is 2, a Resource request based on a buffer with data of a "high" latency requirement or higher may be requested.

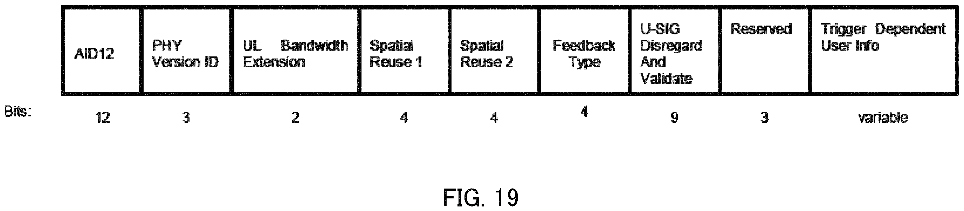

In addition, the Feedback type may be added to the Special user info field (for example, replace a part of a U-SIG Disregard And Validate subfield illustrated in FIG. 19), and a detailed type or the like of the Resource request may be indicated by a combination of the Special user info field and the Trigger type of the User info field.

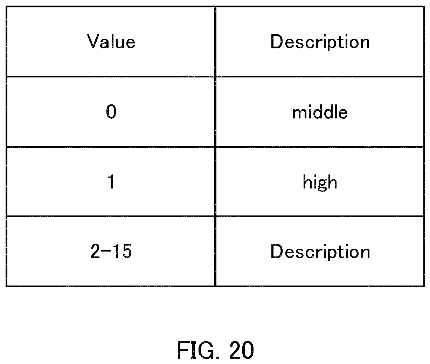

For example, the Special user info field may indicate the Feedback type for Low latency as illustrated in FIG. 17, and the Feedback type of the User info field may indicate the type of the latency requirement (latency requirement = "high", "middle", or the like) as illustrated in FIG. 20.

Note that a new Trigger type may be provided when a Resource request for data with the high latency requirement is requested. For example, Trigger type = 8 is set as the NFRP (low latency), and the first or second Trigger frame generation method may be applied in the case of Trigger type = 8.

In the first Trigger frame generation method, an example has been presented where the TID or the like is indicated by using the Reserved or the like of the User Info field. Instead of the User info field, the specification may be given by using a yet-to-be-used region of the Common info field or the Special user info field.

For example, fields such as the UL STBC, LDPC Extra Symbol Segment, Pre-FEC Padding Factor, PE Disambiguity, UL Spatial Reuse, and Doppler subfields of the Common info field are not used in the NFRP. Thus, a part of these fields may be replaced with information for controlling the latency requirement such as the TID and used.

In addition, for example, all the information (such as the Starting AID and the feedback Type, for example) of the User info field may be indicated by the Special user info field. For example, the Starting AID, the feedback Type, and so on may be indicated by a yet-to-be-used region such as the Reserved subfield or the Trigger dependent user info subfield of the Special user info field.

In addition, the Multiplexing Flag or the like may be indicated by the feedback type. For example, Feedback type = 0 may indicate a resource request in the case of Multiplexing Flag = 0, and Feedback type = 1 may indicate a resource request in the case of Multiplexing Flag = 1. In this case, in the NFRP, the Special user info field is present but the user info field is not present. As described above, the specification information in the NFRP is collected in the Special user info field, so that an amount of control information can be reduced.

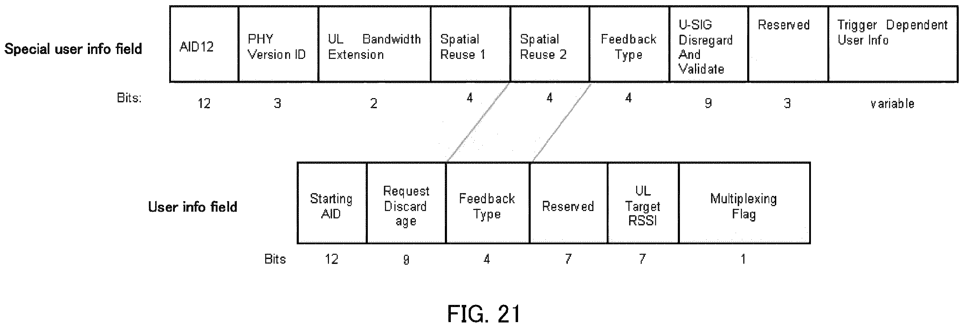

HE terminals do not recognize the format of the NFRP intended for EHT terminals. Thus, for example, as illustrated in FIG. 21, the HE terminals may erroneously recognize, as the feedback type, the Special Reuse 2 subfield located, in the Special user info field, at bits (bits 21 to 24) corresponding to the Feedback type subfield of the User info field.

Accordingly, when the NFRP is transmitted to EHT terminals, a value that is not defined as the Feedback Type in HE, for example, a value other than 0 (which means PSR_DISALLOW in the Special Reuse 2) is set in the Special Reuse 2 subfield of the Special user info field. For example, by fixing the value of the Special Reuse 2 subfield to 15 (which means PSR_AND_NON_SRG_OBSS_PD_PROHIBITED in the Special Reuse 2), the Special reuse is prohibited in the NFRP. This can prevent the HE terminals from erroneously recognizing the Special user info field and from erroneously transmitting a response signal to the NFRP.

<Operation Example of Buffer Determiner 206>

An operation example of buffer determiner 206 in terminal 200 will be described next.

For example, buffer determiner 206 determines the presence or absence of data in the buffer, based on the latency requirement information which terminal 200 is notified of by AP 100 via the Trigger frame.

For example, when the latency requirement information included in the Trigger frame is the TID (in other words, in the case of the first latency requirement control method), buffer determiner 206 determines whether or not a total amount of data with the TID greater than or equal to the specified TID (or the TID at the target bit of 1 in the case of notification by the bitmap) is an amount of data greater than or equal to a buffer threshold value (Resource request buffer threshold exponential) indicated by the NDP Feedback Report Parameter Set element of a beacon or the like, and determines the buffer holding information (FEEDBACK_STATUS).

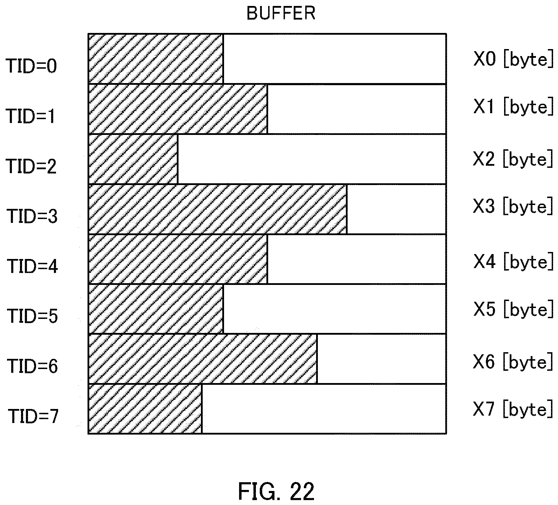

FIG. 22 illustrates an example of a buffer for each TID. A buffer for data is present for each of TID = 0 to 7, and an amount of data held for each TID is represented by $X_n$ (n = 0 to 7), for example. For example, when the TID indicated by the Trigger frame is 4, the total amount of data (= $X_4 + X_5 + X_6 + X_7$) [byte(s)] accumulated in the buffers for TID = 4 to 7 is compared with a value $2^{\text{Resource Request Buffer Threshold Exponent}}$ [byte(s)], which is the threshold value. If the total amount of data is greater than the threshold value, buffer determiner 206 sets FEEDBACK_STATUS = 1. Otherwise, buffer determiner 206 sets FEEDBACK_STATUS = 0.

Similarly, when the latency requirement information is the AC and when the latency requirement information is the Discard age, buffer determiner 206 manages the buffer for each AC or each time up until an MSDU is discarded, and calculates the total amount of data in accordance with the value indicated by the Trigger frame.

Terminal 200 that supports HE but does not support EHT may calculate the total amount of data irrespective of the latency requirement information. For example, in the example of FIG. 22, the total amount of data is equal to $X_0 + X_1 + X_2 + X_3 + X_4 + X_5 + X_6 + X_7$ [byte(s)].

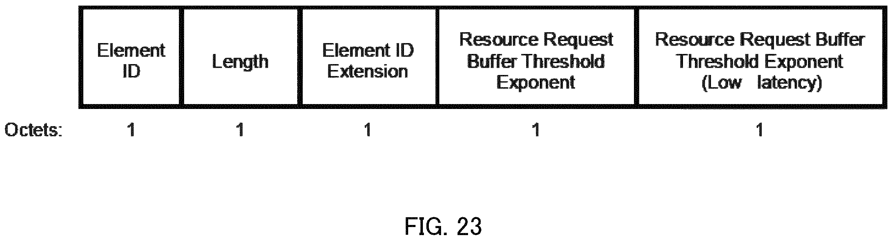

Terminal 200 may be notified of a plurality of buffer threshold values. For example, as illustrated in FIG. 23, terminal 200 may be separately notified of the buffer threshold value used in the case where the latency requirement is not taken into account and the buffer threshold value used in the case where the latency requirement is taken into account (for example, the buffer threshold value for data with the high latency requirement).

For example, when terminal 200 is notified of the TID as the latency requirement information, buffer determiner 206 uses the buffer threshold value indicated by the Resource request buffer threshold exponential (Low latency) to determine the presence or absence of a buffer with data of high latency requirement (in other words, of the specified TID or greater).

Notification of a plurality of buffer threshold values in accordance with the latency requirement allows the buffer threshold values to be flexibly controlled in accordance with the latency requirement. For example, in the case of data with the high latency requirement, the value of the buffer threshold value is decreased, so that if even a little amount of data is held, a resource request (in other words, resource allocation by scheduling) can be made to AP 100 with a minimum latency. Thus, the timing of resource allocation to terminal 200 can be made earlier, and thus terminal 200 can make the transmission start timing of the data with the high latency requirement earlier.

<Supplement to Embodiment 1>

Note that the frequency resource (for example, the tone location) to be used may be separated (in other words, made different) between a resource request based on the total amount of all data or the total amount of data with the low latency requirement and a resource request based on the total amount of data with the high latency requirement.

For example, the Reserved subfield of the User info field is used to indicate a resource location (referred to as Starting RU_TONE_SET_INDEX) of the resource request (referred to as resource request (low latency)) of data with the high latency requirement.

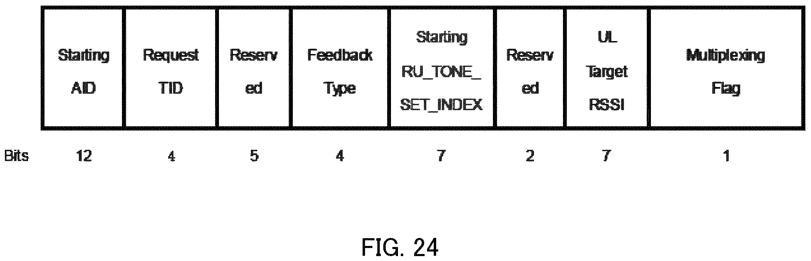

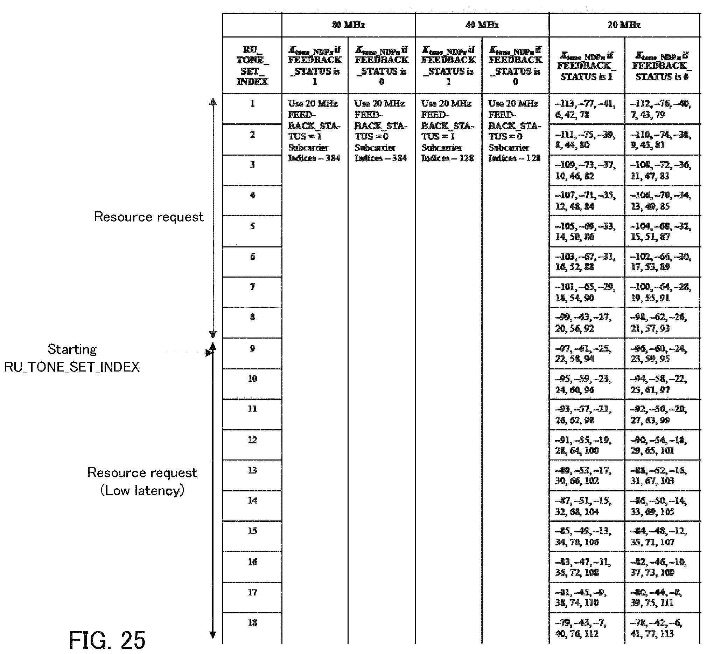

FIG. 24 illustrates a configuration example of the User info field. FIG. 25 illustrates an example of the case of Starting RU_TONE_SET_INDEX = 9 (in the case of BW = 20 MHz).

RU_TONE_SET_INDEX = 1 to 8 corresponds to resources for the resource request based on the total amount of all data or the total amount of data with the low latency requirement, and RU_TONE_SET_INDEX = 9 to 18 corresponds to resources for the resource request of data with the high latency requirement.

In this case, STA 200 in the range of the Starting AID to the Starting AID + 8 uses the resources of RU_TONE_SET_INDEX = 1 to 8 and RU_TONE_SET_INDEX = 9 to 18 for transmission of the resource request. For example, STA 200 transmits the resource request based on the total amount of all data or the total amount of data with the low latency requirement by using any of the resources of RU_TONE_SET_INDEX = 1 to 8, and transmits the resource request for data with the high latency requirement by using any of the resources of RU_TONE_SET_INDEX = 9 to 18.

The resource request may be transmitted using the two resources, or one of the resources (for example, in the case where data with the high latency requirement is held, the resource of the resource request (low latency)) may be used.

As described above, the use of different resources between the resource request based on the total amount of all data or the total amount of data with the low latency requirement and the resource request based on the total amount of data with the high latency requirement allows AP 100 to determine which of the data with the low latency requirement and the data with the high latency requirement is held by terminal 200.

Thus, AP 100 can change the priority of scheduling for terminal 200 in accordance with the determined latency requirement, making it easier to perform scheduling for terminal 200 within the latency requirement.

Note that the resources for the resource request (for example, the range of the RU_TONE_SET_INDEX) may be divided into a plurality of steps (or levels) in accordance with the level of the latency requirement, for example. For example, the range of the RU_TONE_SET_INDEX may be divided into the "high", "middle", and "low" latency requirements, and the resource location (for example, the Starting RU_TONE_SET_INDEX) for the each level of the latency requirement may be indicated in the Reserved subfield of the User info field.

<Embodiment 2>

In Embodiment 1, the method has been described in which terminal 200 determines the buffer holding status (for example, FEEDBACK_STATUS = 0 or 1) to be responded via the resource request in accordance with the latency requirement, based on the control information which terminal 200 is notified of via the Trigger frame. In Embodiment 2, a method will be described in which terminal 200 changes an NDP transmission method in accordance with the latency requirement of data accumulated in the holding buffer without any specification via the Trigger frame from AP 100.

<Configuration Example of AP 100>

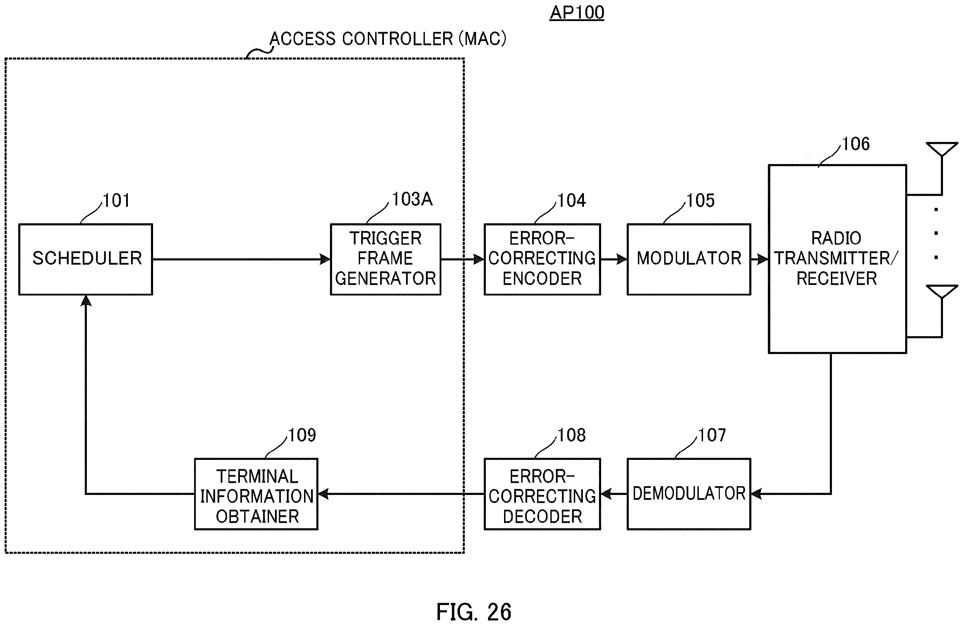

FIG. 26 is a block diagram illustrating a configuration example of AP 100 according to Embodiment 2. As compared with Embodiment 1 (FIG. 10), AP 100 illustrated in FIG. 26 does not require latency requirement controller 102 and differs in an operation of Trigger frame generator 103A. The rest of the configurations and operations may be substantially the same as those of Embodiment 1.

For example, Trigger frame generator 103A generates the Common Info field by using the Trigger type indicated by scheduler 101. For example, Trigger frame generator 103A generates the User Info field by using a predetermined format in accordance with the Trigger type.

If the Trigger type is the NFRP, the User Info field may include the Starting AID subfield, the multiplexing Flag subfield, and the like indicated by scheduler 101. For example, the configuration of the User Info field may be substantially the same as that of the User Info field in HE. For example, Trigger frame generator 103A outputs the generated Trigger frame to error-correcting encoder 104.

<Configuration Example of Terminal 200>

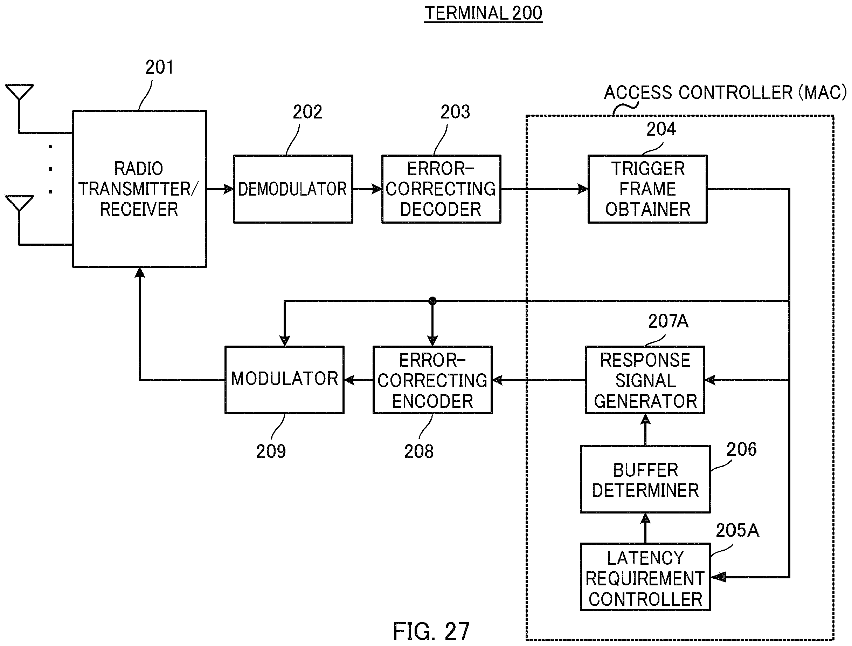

FIG. 27 is a block diagram illustrating a configuration example of terminal 200 according to Embodiment 2. As compared with Embodiment 1 (FIG. 11), terminal 200 illustrated in FIG. 27 differs in operations of latency requirement controller 205A and response signal generator 207A. The rest of the configurations and processing may be substantially the same as those of Embodiment 1.

For example, latency requirement controller 205A may determine whether or not data is data with a high latency requirement, based on the TID, the AC, or the Discard age described in Embodiment 1. Which criterion based on which latency requirement controller 205A determines the latency requirement may be defined in the specifications or the like, or terminal 200 may be notified of the criterion by control information of a beacon, a Trigger frame, or the like. For example, latency requirement controller 205A outputs the latency requirement information to buffer determiner 206 and response signal generator 207A.

Note that the response signal may be generated without the latency requirement information, that is, irrespective of the latency requirement as in HE. In addition, terminal 200 may be notified of whether or not to use the latency requirement information by the control information of a beacon, a Trigger frame, or the like. The control method may be changed also in accordance with the capability of terminal 200. For example, the absence of the latency requirement information may be set for terminal 200 that does not support the latency requirement control.

For example, response signal generator 207A generates data having a predetermined type and a predetermined size, based on the terminal common information and the terminal specific information from Trigger frame obtainer 204, and outputs the data to error-correcting encoder 208.

If the Trigger type is the NFRP, response signal generator 207A checks whether or not AIDs indicated by the Starting AID or the like include the AID held by terminal 200, for example. If the indicated AIDs include the AID held by terminal 200, response signal generator 207A generates the NDP including the HE-LTF or EHT-LTF, based on the buffer holding information (for example, FEEDBACK_STATUS) input from buffer determiner 206, for example.

For example, response signal generator 207A multiplies the HE-LTF or EHT-LTF by the Pmatrix in accordance with the Multiplexing Flag included in the terminal specific information. Here, for example, response signal generator 207A controls the tone location (in other words, (the frequency mapping location) of the HE-LTF or EHT-LTF included in the NDP or the Pmatrix to be multiplied in accordance with the latency requirement information input from latency requirement controller 205. Details of response signal generator 207A will be described later.

Note that which format of HE and EHT is used to generate the response signal may be indicated by the Common info of the Trigger frame (or the Common info and the Special user info of the Trigger frame), for example. In addition, when the NFRP is indicated, response signal generator 207A may generate the response signal by using the HE format, for example. For example, the generated response signal is output to error-correcting encoder 208.

<Operation Example of Response Signal Generator 207A>

An operation example of response signal generator 207A will be described next. For example, response signal generator 207A may change an NDP generation method in accordance with the latency requirement information input from latency requirement controller 205A.

<First NDP Generation Method>

The first NDP generation method is a method of notifying AP 100 of whether or not the latency requirement of data held by terminal 200 is high by using the pattern of the Pmatrix by which the HE-LTF or EHT-LTF of the NDP is multiplied.

For example, AP 100 performs reception processing by using a plurality of Pmatrix patterns, and determines whether or not the latency requirement of the data held by terminal 200 is high, based on the Pmatrix pattern with which detection of a signal is successful. Note that in HE, the number of symbols of the HE-LTF of the NDP, which is an example of the response signal to the NFRP, is fixed to two.

Accordingly, in the first NDP generation method, the number of symbols may be fixed to two, or the number of symbols of the HE/EHT-LTF of the NDP may be changed in accordance with the value of a Number Of EHT-LTF Symbols And Midamble Periodicity subfield included in the common info of the Trigger frame. Details of the Pmatrix for each number of symbols will be described later. In addition, "HE/EHT-LTF" means the HE-LTF or EHT-LTF.

In this manner, terminal 200 notifies AP 100 of the latency requirement of data held by terminal 200 by using the Pmatrix pattern, so that AP 100 can recognize the latency requirement of the data held by terminal 200.

Thus, AP 100 can preferentially allocate a resource to terminal 200 holding the data with the high latency requirement (also referred to as low latency data), for example. This allows terminal 200 holding the data with the high latency requirement to transmit the data within a time of the allowable latency by using the preferentially allocated resource.

<Specific Example in Case where Number of HE/EHT-LTF Symbols is 2>

In the case of Multiplexing Flag (included in the User Info) = 0, if terminal 200 holds data with a low latency requirement (or data for all of which the latency requirement need not be taken into account), response signal generator 207A may make the Pmatrix pattern (in other words, an orthogonal sequence pattern) different between the Pmatrix by which the HE/EHT-LTF of the NDP, which is an example of a response signal to the NFRP, is multiplied and the Pmatrix by which the HE/EHT-LTF is multiplied when terminal 200 holds data with a high latency requirement.

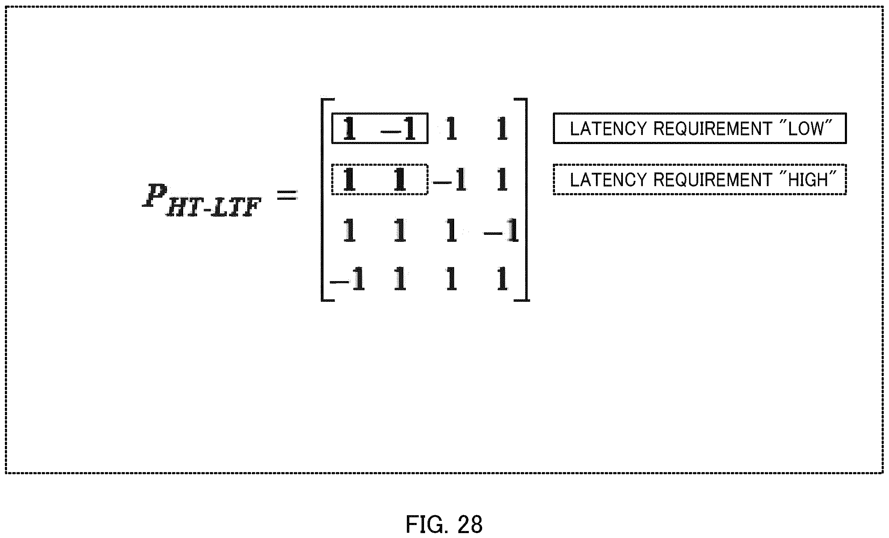

For example, as illustrated in FIG. 28, response signal generator 207A may multiply the HE/EHT-LTF by a Pmatrix [1 -1] when terminal 200 holds data with the low latency requirement (or data for all of which the latency requirement need not be taken into account) and may multiple the HE/EHT-LTF by a Pmatrix [1 1] when terminal 200 holds data with the high latency requirement.

In the case of the number of symbols of 2, control can be performed also when the HE terminal and the EHT terminal coexist. For example, in the case of Multiplexing Flag = 0, HE terminal 200 may use the Pmatrix [1 -1] among the two Pmatrixes [1 -1] and [1 1] and EHT terminal 200 may use the Pmatrix [1 -1] and the Pmatrix [1 1] in a switched manner in accordance with the latency requirement of the data held therein.

Note that the Pmatrix [11] may be used for data with the low latency requirement (or data for all of which the latency requirement need not be taken into account), and the Pmatrix of [1 -1] may be used for data with the high latency requirement.

<Specific Example in Case where Number of HE/EHT-LTF Symbols is 4>

If terminal 200 holds data with the low latency requirement (or data for all of which the latency requirement need not be taken into account), response signal generator 207A may make the Pmatrix pattern different between the Pmatrix by which the HE/EHT-LTF of the NDP, which is an example of a response signal to the NFRP, is multiplied, and the Pmatrix by which the HE/EHT-LTF is multiplied when terminal 200 holds data with the high latency requirement.

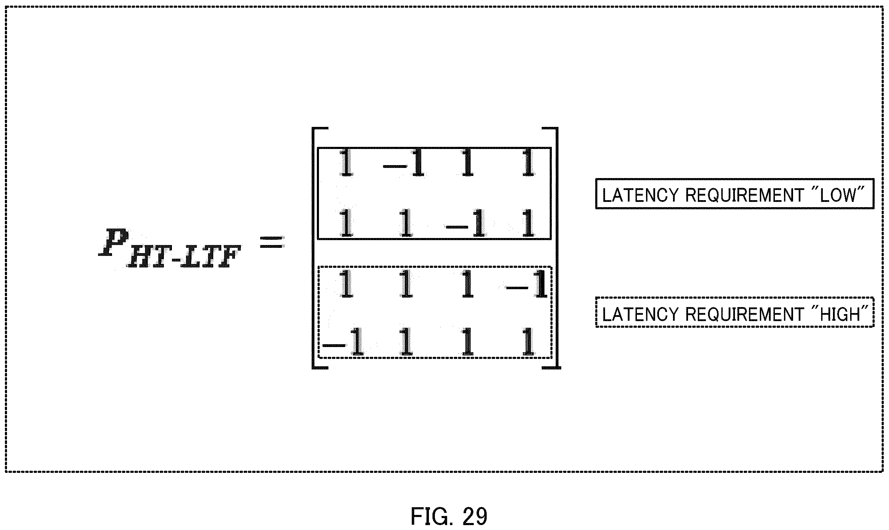

For example, as illustrated in FIG. 29, response signal generator 207A may multiply the HE/EHT-LTF by a Pmatrix [1 -1 1 1] or [1 1 -1 1] when terminal 200 holds data with the low latency requirement (or data for all of which the latency requirement need not be taken into account) and may multiple the HE/EHT-LTF by a Pmatrix [1 1 1 -1] or [-1 1 1 1] when terminal 200 holds data with the high latency requirement.

Alternatively, response signal generator 207A may multiply the HE/EHT-LTF by the Pmatrix [1 1 1 -1] or [-1 1 1 1] when terminal 200 holds data with the low latency requirement (or data for all of which the latency requirement need not be taken into account) and may multiple the HE/EHT-LTF by the Pmatrix [1 -1 1 1] or [1 1 -1 1] when terminal 200 holds data with the high latency requirement.

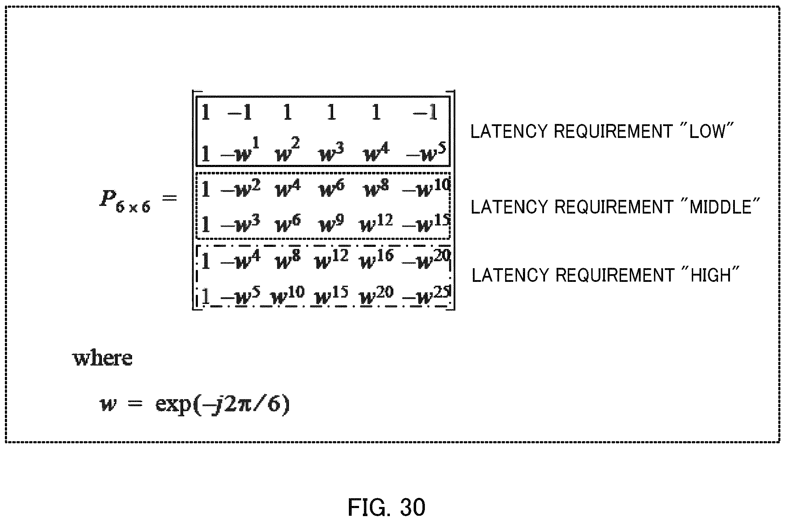

Note that when the number of symbols is more than four symbols, a plurality of types of latency requirement may be provided (such as latency requirements of "low", "middle", and "high", for example) as illustrated in FIG. 30, for example.

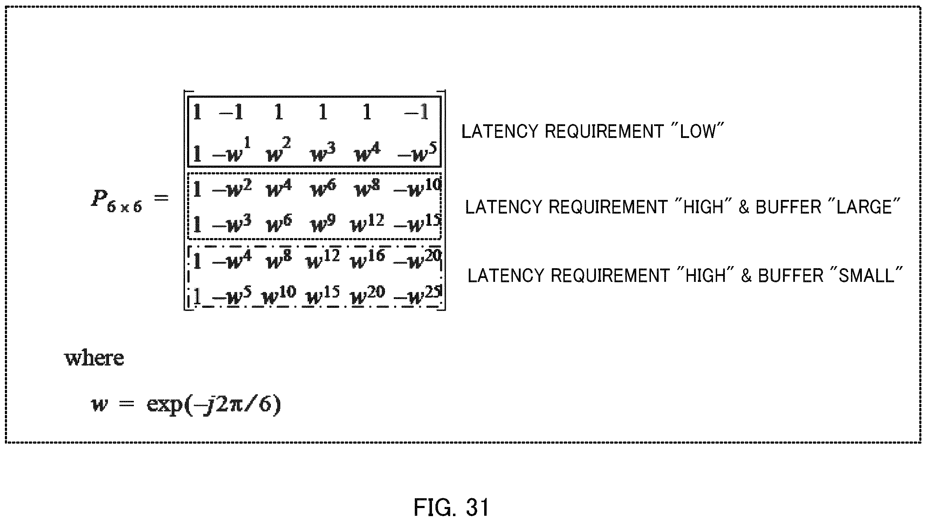

The Pmatrix pattern may be made different by using other information and the latency requirement in combination. For example, as illustrated in FIG. 31, the Pmatrix pattern may be made different in accordance with the latency requirement and the size of data accumulated in the buffer. What information each Pmatrix pattern is associated with may be indicated for terminal 200 by the Common info or User info field.

<Second NDP Generation Method>

The second NDP generation method is a method of notifying AP 100 of whether or not the latency requirement of data held by terminal 200 is high by using the tone (frequency) location to which the HE/EHT-LTF of the NDP is mapped.

For example, AP 100 performs reception processing at a plurality of tone locations of the HE/EHT-LTF, and determines whether or not the latency requirement of the data held by terminal 200 is high, based on the tone location at which detection of a signal is successful.

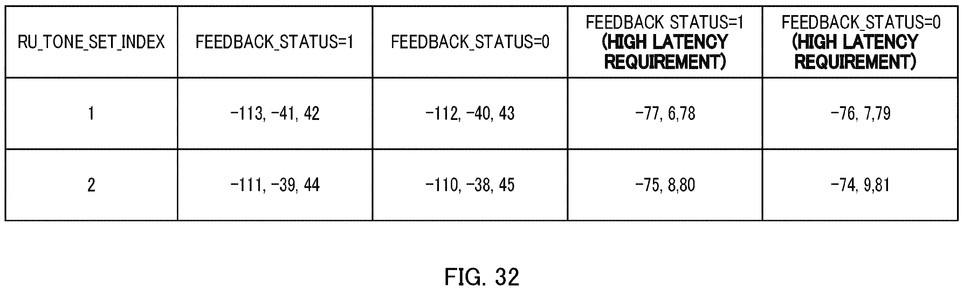

FIG. 32 illustrates an example of the tone locations of the HE/EHT-LTF. Note that FIG. 32 illustrates the tone locations of the HE/EHT-LTF for RU_TONE_SET_INDEX = 1 and 2, and illustration of the tone locations of the HE/EHT-LTF for the other RU_TONE_SET_INDEX is omitted.

When terminal 200 holds data with the low latency requirement (or data for all of which the latency requirement need not be taken into account) and there is data to be transmitted (for example, FEEDBACK_STATUS = 1), terminal 200 for which RU_TONE_SET_INDEX = 1 is indicated transmits the HE/EHT-LTF at a tone location of (-113, -41, 42), for example.

On the other hand, when terminal 200 does not hold data to be transmitted (for example, FEEDBACK_STATUS = 0), terminal 200 for which RU_TONE_SET_INDEX = 1 is indicated transmits the HE/EHT-LTF at a tone location of (-112, -40, 41), for example.

Similarly, terminal 200 for which RU_TONE_SET_INDEX = 2 is indicated transmits the HE/EHT-LTF at different tone locations when terminal 200 holds data with the low latency requirement (or data for all of which the latency requirement need not be taken into account) and when terminal 200 does not hold data to be transmitted.

In contrast, when terminal 200 holds data with the high latency requirement and there is data to be transmitted (for example, FEEDBACK_STATUS = 1), terminal 200 for which RU_TONE_SET_INDEX = 1 is indicated transmits the HE/EHT-LTF at a tone location of (-77, -6, 78), for example.

On the other hand, when terminal 200 does not hold data to be transmitted (for example, FEEDBACK_STATUS = 0), terminal 200 for which RU_TONE_SET_INDEX = 1 is indicated transmits the HE/EHT-LTF at a tone location of (-76, 7, 79), for example.

Similarly, terminal 200 for which RU_TONE_SET_INDEX = 2 is indicated may transmit the HE/EHT-LTF at different tone locations when terminal 200 holds data with the high latency requirement and when terminal 200 does not hold data to be transmitted.

In this manner, terminal 200 implicitly notifies AP 100 of the latency requirement of the data held therein by using the tone (frequency) location to which the HE/EHT-LTF is mapped, so that AP 100 can recognize the latency requirement of the data held in terminal 200.

Accordingly, for example, AP 100 preferentially allocates a resource to terminal 200 holding the data with the high latency requirement, so that terminal 200 can transmit the data within a time of the allowable latency.

Note that when terminal 200 holds both data with the high latency requirement and data with the low latency requirement, terminal 200 may transmit the HE/EHT-LTF by using both of the resources, for example, at the tone locations of (-113, -41, 42) and (-77, -6, 78).

In addition, in the case of FEEDBACK_STATUS = 0, a resource for data with the low latency requirement (or data for all of which the latency requirement need not be taken into account) may be the same as a resource for data with the high latency requirement. In this case, for example, terminal 200 may allocate the tone for FEEDBACK_STATUS = 0 for data with the high latency requirement to other data. Since there is no data to be transmitted, the resources for transmitting the HE/EHT-LTF need not be separated between the data with the high latency requirement and the data with the low latency requirement in the case of FEEDBACK_STATUS = 0.

In addition, the set of candidate tone locations used for transmission of the HE/EHT-LTF may be divided into a plurality of steps (or levels) in accordance with the level of the latency requirement, for example. For example, the set of candidate tone locations may be defined for each of "high", "middle", and "low" latency requirements.

<Embodiment 3>

In Embodiment 3, a method of switching between a Resource request for data with a low latency requirement (or data for all of which a latency requirement need not be taken into account) and a Resource request for data with a high latency requirement in accordance with a transmission timing of a response signal to an NFRP will be described. A non-limiting example of the timing is a timing based on TWT (Target Wakeup Time).

To reduce the power consumption of terminals 200 and the resource collision between terminals 200, AP 100 can indicate a wake/doze status of each terminal 200 by using TWT (see NPL 2 for example). A time interval in which terminal 200 wakes up in accordance with TWT-based control is referred to as a TWT service period (SP).

In EHT, Restricted TWT is studied in consideration of services intended for a low latency (in other words, a high latency requirement) (see NPLs 4 and 5, for example). A Restricted TWT SP has a restriction that only transmission of data of a low latency is permitted.

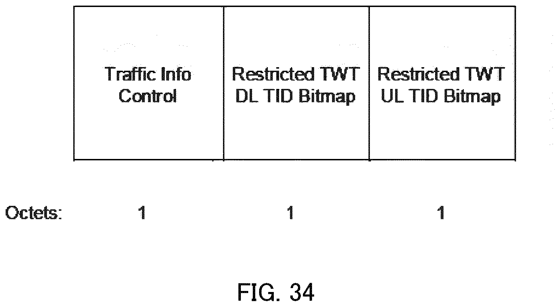

For example, information on low latency data (with the high latency requirement) is indicated in a Restricted TWT Traffic info field in a beacon illustrated in FIG. 34. For example, a bitmap format is used for this specification, and 1 is set to the TID for the low latency (high latency requirement).

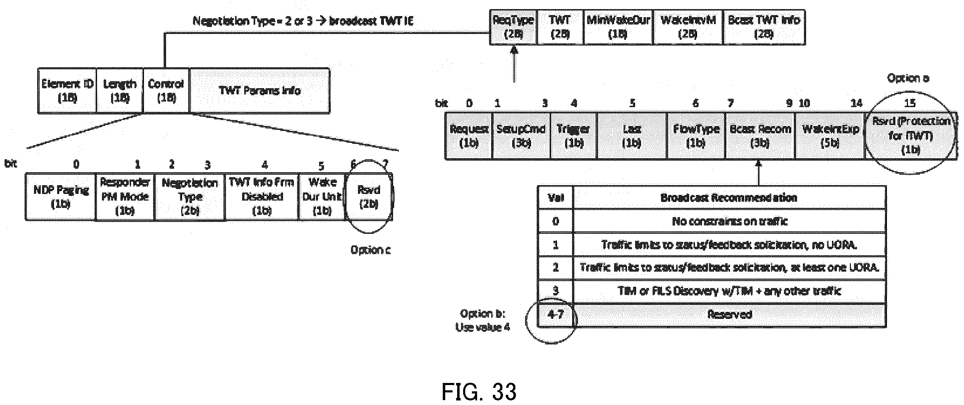

Although a control method based on the Restricted TWT is being studied now, the Restricted TWT is possibly indicated by an Option b in FIG. 33, for example, a Broadcast TWT Recommendation subfield of a Broadcast TWT Parameter Set field included in a beacon. For example, Val = 4 indicates the Restricted TWT.

<Configuration of AP 100>

A configuration example of AP 100 according to Embodiment 3 may be substantially the same as that of Embodiment 2.

<Configuration of Terminal 200>

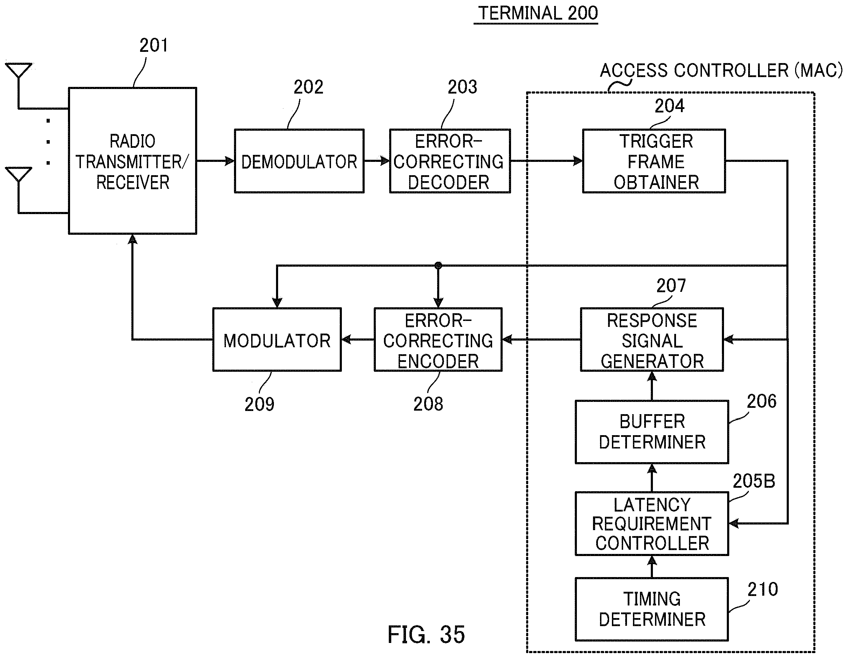

FIG. 35 is a block diagram illustrating a configuration example of terminal 200 according to Embodiment 3. As compared with the configuration of Embodiment 2 (FIG. 27), timing determiner 210 is added and an operation of latency requirement controller 205B is different. The operation of response signal generator 207 may be substantially the same as that in Embodiment 1. The rest of the configurations and operations may be substantially the same as those of Embodiment 2.

For example, timing determiner 210 determines whether or not the transmission timing of the response signal to the NFRP is within the Restricted TWT Service period, and outputs the determination result to latency requirement controller 205B. An example of a detailed sequence will be described later.

For example, latency requirement controller 205B changes the latency requirement information in accordance with the determination result (for example, whether or not the transmission timing of the response signal is within the Restricted TWT Service period) input from timing determiner 210.

Whether or not data is data with the high latency requirement may be determined based on a parameter such as the TID, the AC, or the Discard age described in Embodiment 1. Which criterion based on which latency requirement controller 205B determines the latency requirement may be defined in the specifications or the like, or may be indicated for terminal 200 by using control information of a beacon, a Trigger frame, or the like.

For example, if the determination result input from timing determiner 210 indicates that the transmission timing of the response signal is within the Restricted TWT Service period, latency requirement controller 205B outputs latency requirement information for a high latency requirement (for example, TID = 4, 5, 6, 7) to buffer determiner 206, for example.

Note that the latency requirement information may be controlled based on the TID indicated by a Restricted TWT UL TID Bitmap in the Restricted TWT Traffic info field.

If the determination result input from timing determiner 210 indicates that the transmission timing of the response signal is not within the Restricted TWT Service period or within an interval of the TWT service period, latency requirement controller 205B outputs the absence of the latency requirement information to buffer determiner 206, for example. In this case, for example, buffer determiner 206 calculates a buffer size irrespective of the latency requirement as in HE.

<Example of Control Sequence>

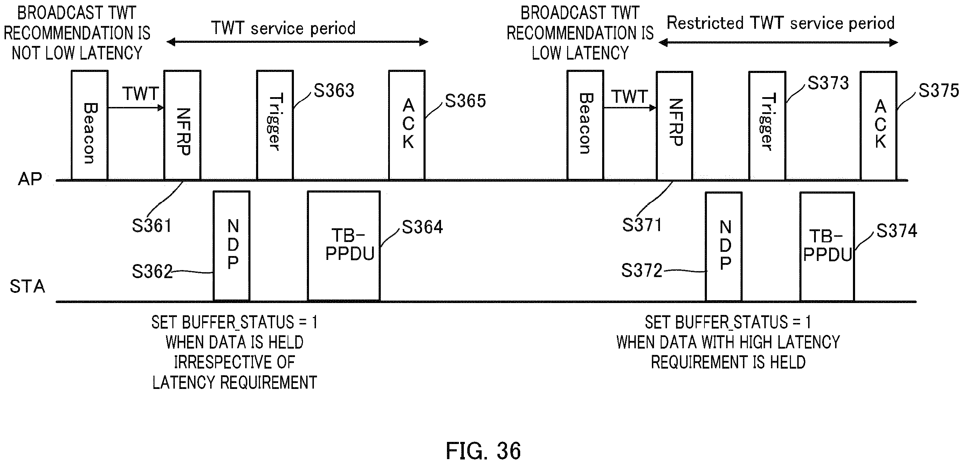

FIG. 36 illustrates an example of a control sequence.

For example, if the value of the Broadcast TWT Recommendation subfield of the Broadcast TWT Parameter Set field of a beacon is not the Restricted TWT (for example, in the case of val = 0, 1, 2, 3), AP 100 uses a Trigger frame (NFRP) to request terminal (STA) 200 to transmit a resource request in the TWT SP indicated by the beacon (S361). Note that the time interval of the TWT SP is an example of a first wakeup time.

For example, in transmission of an NDP which is an example of the response signal, STA 200 sets BUFFER_STATUS = 1 if the held data is more than or equal to a threshold value and sets BUFFER_STATUS = 0 if the held data is less than or equal to the threshold value irrespective of the latency requirement as in the operation in HE, and transmits the NDP at the corresponding tone location in the interval of the TWT SP (S362).

Thereafter, for example, AP 100 recognizes the data holding status of STA 200 based on the response signal, and transmits a Trigger frame (basic) to STA 200 holding the data (S363).

STA 200 transmits the data via a response signal (TB-PPDU) (S364). AP 100 returns, as an ACK to STA200, whether or not the data has been successfully received (S365).

On the other hand, if the value of the Broadcast TWT Recommendation subfield of the Broadcast TWT Parameter Set field of the beacon is the Restricted TWT (for example, in the case of val = 4), AP 100 uses a Trigger frame (NFRP) to request STA 200 to transmit a resource request in the Restricted TWT SP indicated by the beacon, for example (S371).

Note that the time interval of the Restricted TWT SP is an example of a second wakeup time in which data transmission is restricted in accordance with the latency requirement relative to the first wakeup time. The order of the TWT SP (first wakeup time) and the Restricted TWT SP (second wakeup time) in time may be reversed. There may be a case where the Restricted TWT SP is indicated and then the TWT SP is indicated.

For example, in transmission of an NDP which is an example of the response signal, STA200 sets BUFFER_STATUS = 1 if the held data with the high latency requirement (for example, TID = 4, 5, 6, 7) is more than or equal to the threshold value and sets BUFFER_STATUS = 0 if the held data is less than or equal to the threshold value, and transmits the NDP at the corresponding tone location in the interval of the Restricted TWT SP (S372).

Thereafter, for example, AP 100 recognizes the data holding status of STA 200 based on the response signal, and transmits a Trigger frame (basic) to STA 200 holding the data (S373).

STA 200 transmits the data via a response signal (TB-PPDU) (S374). AP 100 returns, as an ACK to STA200, whether or not the data has been successfully received (S375).

In this manner, by changing the latency requirement information in accordance with whether or not the transmission timing of the response signal by terminal 200 is within the Restricted TWT SP, terminal 200 can notify AP 100 of the latency requirement of the data held therein.

Accordingly, AP 100 can recognize the latency requirement of the data held by terminal 200 and can preferentially allocate the resource to terminal 200 holding the data with the high latency requirement, for example. Consequently, terminal 200 can transmit the data within a time of the allowable latency.

<Supplement to Entirety>

Two or more of Embodiments 1, 2, and 3 may be used in combination. For example, by combining Embodiment 1 and Embodiment 3, the buffer holding information (FEEDBACK_STATUS) may be controlled based on the latency requirement information indicated by the User info field of the Trigger frame in the interval of the Restricted TWT SP, and the buffer holding information (FEEDBACK_STATUS) may be controlled irrespective of the latency requirement as in HE in the interval that is not the interval of the Restricted TWT Service period or is the interval of the TWT service period.

In addition, for example, by combining Embodiment 2 and Embodiment 3, the NDP generation method may be changed in accordance with the latency requirement in the interval of the Restricted TWT SP, and the NDP may be generated irrespective of the latency requirement as in HE in the interval that is not the interval of the Restricted TWT Service period or is the interval of the TWT service period.

The access scheme for transmission of an uplink response signal to a Trigger frame is not limited to OFDMA and may be another scheme.

In addition, in Embodiments 1 to 3, the description has been given based on the format of 11be as a non-limiting example. However, the format to which the one exemplary embodiment of the present disclosure is applied is not limited to the format of 1 1be. The one exemplary embodiment of the present disclosure may be applied to, for example, IEEE 802.11bd (NGV (Next Generation V2X)) which is a next-generation standard of the standard IEEE 802. 11p for in-vehicle applications.

Information indicating whether or not terminal 200 supports the functions, operations, or processing presented in the above-described embodiments, modifications, and supplements may be transmitted (or notified or indicated) from terminal 200 to base station 100 as capability information or a capability parameter of terminal 200, for example.

The capability information may include an information element (IE) individually indicating whether or not terminal 200 supports at least one of the functions, operations, or processing presented in the above-described embodiments, modifications, and supplements. Alternatively, the capability information may include an information element indicating whether or not terminal 200 supports a combination of any two or more of the functions, operations, or processing presented in the above-described embodiments, modifications, and supplements.

For example, based on the capability information received from terminal 200, base station 100 may determine (or identify or assume) a function, an operation, or processing supported (or not supported) by terminal 200 that has transmitted the capability information. Base station 100 may perform an operation, processing, or control according to the determination result based on the capability information. For example, based on the capability information received from terminal 200, base station 100 may control at least one of the functions, operations, or processing presented in the above-described embodiments, modifications, and supplements.

The fact that terminal 200 does not support some of the functions, operations, or processing presented in the above-described embodiments, modifications, and supplements may be read as that the some of the functions, operations, or processing are restricted in terminal 200. For example, base station 100 may be notified of information or a request on such a restriction.

For example, the information on the capability or the restriction of terminal 200 may be defined in the standards or the like, or base station 100 may be implicitly notified of the information in association with information known in base station 100 or information transmitted to base station 100.

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI herein may be referred to as an IC, a system LSI, a super LSI, or an ultra LSI depending on a difference in the degree of integration.

However, the technique of implementing an integrated circuit is not limited to the LSI and may be realized by using a dedicated circuit, a general-purpose processor, or a special-purpose processor. In addition, a Field Programmable Gate Array (FPGA) that can be programmed after the manufacture of the LSI or a reconfigurable processor in which the connections and the settings of circuit cells disposed inside the LSI can be reconfigured may be used. The present disclosure can be realized as digital processing or analogue processing.

If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus. The communication apparatus may comprise a transceiver and processing/control circuitry. The transceiver may comprise and/or function as a receiver and a transmitter. The transceiver, as the transmitter and receiver, may include an RF (radio frequency) module and one or more antennas. The RF module may include an amplifier, an RF modulator/demodulator, or the like. Some non-limiting examples of such a communication apparatus include a phone (e.g., cellular (cell) phone, smart phone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (IoT)."

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

A terminal according to one embodiment of the present disclosure includes: reception circuitry, which, in operation, receives a control signal; and control circuitry, which, in operation, controls a transmission method of a response signal to reception of the control signal, based on a buffer status of data satisfying a predetermined requirement.

In the terminal according to one embodiment of the present disclosure, the requirement is a requirement related to a latency for the data.

In the terminal according to one embodiment of the present disclosure, the requirement is based on a traffic indicator, an access category, or a time up until the data is discarded.

In the terminal according to one embodiment of the present disclosure, the requirement is indicated in a user information field of the control signal.

In the terminal according to one embodiment of the present disclosure, the control circuit makes a frequency resource used for transmission of the response signal different between transmission data with a high requirement and transmission data with a low requirement.

In the terminal according to one embodiment of the present disclosure, a location of the frequency resource for the transmission data with the high requirement is indicated in a user information field of the control signal.

In the terminal according to one embodiment of the present disclosure, presence or absence of the requirement or a level of the requirement is indicated by a value of a feedback type subfield of a user information field of the control signal.

In the terminal according to one embodiment of the present disclosure, the control circuit indicates, in the response signal, the requirement of the data held in a buffer, by using an orthogonal sequence pattern applied to a training signal of the response signal.

In the terminal according to one embodiment of the present disclosure, the control circuit indicates the requirement in the response signal in a case where the number of symbols of the training signal is two and a value of a multiplex flag subfield of the control signal is 0.

In the terminal according to one embodiment of the present disclosure, the control circuit indicates the requirement of the data held in a buffer, by using a frequency resource for transmission of the response signal.

In the terminal according to one embodiment of the present disclosure, the control circuit indicates, in the response signal, the buffer status of the data satisfying the requirement in a case where the control signal is received within a second wakeup time in which data transmission is restricted in accordance with the requirement relative to a first wakeup time.

In the terminal according to one embodiment of the present disclosure, the control circuit indicates, in the response signal, the buffer status of the data irrespective of the requirement in a case where the control signal is received within the first wakeup time.

A base station according to one embodiment of the present disclosure includes: control circuitry, which, in operation, sets, in a control signal for triggering transmission of a response signal, information on a predetermined requirement with which a terminal controls a transmission method of the response signal based on a buffer status of data satisfying the requirement; and transmission circuitry, which, in operation, transmits the control signal to the terminal.

A communication method according to one embodiment of the present disclosure incldes: receiving, by a terminal, a control signal; and controlling, by the terminal, a transmission method of a response signal to reception of the control signal, based on a buffer status of data satisfying a predetermined requirement.

The disclosure of Japanese Patent Application No. 2021-089176 filed on May 27, 2021, including the specification, the drawings, and the abstract, is incorporated herein by reference in its entirety.

Industrial Applicability

One exemplary embodiment of the present disclosure is useful for a radio communication system.

Reference Signs List

    100 AP
    101 scheduler
    102, 205, 205A, 205B latency requirement controller
    103 Trigger frame generator
    104, 208 error-correcting encoder
    105, 209 modulator
    106, 201 radio transmitter/receiver
    107, 202 demodulator
    108, 203 error-correcting decoder
    109 terminal information obtainer
    200 terminal (STA)
    204 Trigger frame obtainer
    206 buffer determiner
    207, 207A response signal generator

**Claims**

1. A terminal, comprising:

       reception circuitry, which, in operation, receives a control signal; and
       control circuitry, which, in operation, controls a transmission method of a response signal to reception of the control signal, based on a buffer status of data satisfying a predetermined requirement.

2. The terminal according to claim 1, wherein
   the requirement is a requirement related to a latency for the data.

3. The terminal according to claim 1, wherein
   the requirement is based on a traffic indicator, an access category, or a time up until the data is discarded.

4. The terminal according to claim 1, wherein
   the requirement is indicated in a user information field of the control signal.

5. The terminal according to claim 3, wherein
   the control circuit makes a frequency resource used for transmission of the response signal different between transmission data with a high requirement and transmission data with a low requirement.

6.  The terminal according to claim 5, wherein
    a location of the frequency resource for the transmission data with the high requirement is indicated in a user information field of the control signal.

7.  The terminal according to claim 1, wherein
    presence or absence of the requirement or a level of the requirement is indicated by a value of a feedback type subfield of a user information field of the control signal.

8.  The terminal according to claim 1, wherein
    the control circuit indicates, in the response signal, the requirement of the data held in a buffer, by using an orthogonal sequence pattern applied to a training signal of the response signal.

9.  The terminal according to claim 8, wherein
    the control circuit indicates the requirement in the response signal in a case where the number of symbols of the training signal is two and a value of a multiplex flag subfield of the control signal is 0.

10. The terminal according to claim 1, wherein
    the control circuit indicates the requirement of the data held in a buffer, by using a frequency resource for transmission of the response signal.

11. The terminal according to claim 1, wherein
    the control circuit indicates, in the response signal, the buffer status of the data satisfying the requirement in a case where the control signal is received within a second wakeup time in which data transmission is restricted in accordance with the requirement relative to a first wakeup time.

12. The terminal according to claim 11, wherein
    the control circuit indicates, in the response signal, the buffer status of the data irrespective of the requirement in a case where the control signal is received within the first wakeup time.

13. A base station, comprising:

    control circuitry, which, in operation, sets, in a control signal for triggering transmission of a response signal, information on a predetermined requirement with which a terminal controls a transmission method of the response signal based on a buffer status of data satisfying the requirement; and
    transmission circuitry, which, in operation, transmits the control signal to the terminal.

14. A communication method, comprising:

    receiving, by a terminal, a control signal; and
    controlling, by the terminal, a transmission method of a response signal to reception of the control signal, based on a buffer status of data satisfying a predetermined requirement.

MAC header

| Frame Control | Duration | RA | TA | Common Info | User Info List | Padding | FCS |
|---|---|---|---|---|---|---|---|
| 2 | 2 | 6 | 6 | 8 or more | variable | variable | 4 |

Octets:

FIG. 1

| Trigger Type | UL Length | More TF | CS Required | UL BW | GI And EHT-LTF Type | MU-MIMO EHT-LTF Mode | Number Of EHT-LTF Symbols And Midamble Periodicity |
|---|---|---|---|---|---|---|---|
| 4 | 12 | 1 | 1 | 2 | 2 | 1 | 3 |

Bits:

| UL STBC | LDPC Extra Symbol Segment | AP Tx Power | Pre-FEC Padding Factor | PE Disambiguity | UL Spatial Reuse | Doppler | HE/EHT P160 | Special User Info Field Present |
|---|---|---|---|---|---|---|---|---|
| 1 | 1 | 6 | 2 | 1 | 16 | 1 | 1 | 1 |

Bits:

| Reserved | Reserved | Trigger Dependent Common Info |
|---|---|---|
| 7 | 1 | Variable |

Bits:

FIG. 2

**Table 9-29c—Trigger Type subfield encoding**

| Trigger Type subfield value | Trigger frame variant |
|---|---|
| 0 | Basic |
| 1 | Beamforming Report Poll (BFRP) |
| 2 | MU-BAR |
| 3 | MU-RTS |
| 4 | Buffer Status Report Poll (BSRP) |
| 5 | GCR MU-BAR |
| 6 | Bandwidth Query Report Poll (BQRP) |
| 7 | NDP Feedback Report Poll (NFRP) |
| 8-15 | Reserved |

FIG. 3

EP 4 351 244 A1

| Starting AID | Reserved | Feedback Type | Reserved | UL Target RSSI | Multiplexing Flag |
|---|---|---|---|---|---|
| Bits    12 | 9 | 4 | 7 | 7 | 1 |

FIG. 4

| Value | Description |
|---|---|
| 0 | Resource request |
| 1-15 | Reserved |

FIG. 5

| RU_TONE_SET_INDEX | 80 MHz | | 40 MHz | | 20 MHz | |
|---|---|---|---|---|---|---|
| | $K_{tone\_NDPx}$ if FEEDBACK_STATUS is 1 | $K_{tone\_NDPx}$ if FEEDBACK_STATUS is 0 | $K_{tone\_NDPx}$ if FEEDBACK_STATUS is 1 | $K_{tone\_NDPx}$ if FEEDBACK_STATUS is 0 | $K_{tone\_NDPx}$ if FEEDBACK_STATUS is 1 | $K_{tone\_NDPx}$ if FEEDBACK_STATUS is 0 |
| 1 | Use 20 MHz FEEDBACK_STATUS = 1 Subcarrier Indices – 384 | Use 20 MHz FEEDBACK_STATUS = 0 Subcarrier Indices – 384 | Use 20 MHz FEEDBACK_STATUS = 1 Subcarrier Indices – 128 | Use 20 MHz FEEDBACK_STATUS = 0 Subcarrier Indices – 128 | −113, −77, −41, 6, 42, 78 | −112, −76, −40, 7, 43, 79 |
| 2 | | | | | −111, −75, −39, 8, 44, 80 | −110, −74, −38, 9, 45, 81 |
| 3 | | | | | −109, −73, −37, 10, 46, 82 | −108, −72, −36, 11, 47, 83 |
| 4 | | | | | −107, −71, −35, 12, 48, 84 | −106, −70, −34, 13, 49, 85 |
| 5 | | | | | −105, −69, −33, 14, 50, 86 | −104, −68, −32, 15, 51, 87 |
| 6 | | | | | −103, −67, −31, 16, 52, 88 | −102, −66, −30, 17, 53, 89 |
| 7 | | | | | −101, −65, −29, 18, 54, 90 | −100, −64, −28, 19, 55, 91 |
| 8 | | | | | −99, −63, −27, 20, 56, 92 | −98, −62, −26, 21, 57, 93 |
| 9 | | | | | −97, −61, −25, 22, 58, 94 | −96, −60, −24, 23, 59, 95 |
| 10 | | | | | −95, −59, −23, 24, 60, 96 | −94, −58, −22, 25, 61, 97 |
| 11 | | | | | −93, −57, −21, 26, 62, 98 | −92, −56, −20, 27, 63, 99 |
| 12 | | | | | −91, −55, −19, 28, 64, 100 | −90, −54, −18, 29, 65, 101 |
| 13 | | | | | −89, −53, −17, 30, 66, 102 | −88, −52, −16, 31, 67, 103 |
| 14 | | | | | −87, −51, −15, 32, 68, 104 | −86, −50, −14, 33, 69, 105 |
| 15 | | | | | −85, −49, −13, 34, 70, 106 | −84, −48, −12, 35, 71, 107 |
| 16 | | | | | −83, −47, −11, 36, 72, 108 | −82, −46, −10, 37, 73, 109 |
| 17 | | | | | −81, −45, −9, 38, 74, 110 | −80, −44, −8, 39, 75, 111 |
| 18 | | | | | −79, −43, −7, 40, 76, 112 | −78, −42, −6, 41, 77, 113 |

FIG. 6

$$P_{HT\text{-}LTF} = \begin{bmatrix} 1 & -1 & 1 & 1 \\ 1 & 1 & -1 & 1 \\ 1 & 1 & 1 & -1 \\ -1 & 1 & 1 & 1 \end{bmatrix}$$

USED BY STA HOLDING AID IN RANGE FROM
"STARTING AID" TO "STARTING AID" $+ 18 \times 2^{BW} - 1$

USED BY STA HOLDING AID IN RANGE FROM
"STARTING AID" $+ 18 \times 2^{BW}$ TO
"STARTING AID" $+ 18 \times 2^{BW} \times 2 - 1.$

FIG. 7

EP 4 351 244 A1

100

11 12

| CONTROLLER | → | TRANSMITTER |

FIG. 8

200

21                                    22

| RECEIVER | → | CONTROLLER |

FIG. 9

FIG. 10

FIG. 11

EP 4 351 244 A1

| User Priority (UP) | 802.1D class | QoS Access Category | Designation |
|---|---|---|---|
| 1 | BK | AC_BK | Background |
| 2 | — | AC_BK | Background |
| 0 | BE | AC_BE | Best Effort |
| 3 | EE | AC_BE | Best Effort |
| 4 | CL | AC_VI | Video |
| 5 | VI | AC_VI | Video |
| 6 | VO | AC_VO | Voice |
| 7 | NC | AC_VO | Voice |

FIG. 12

EP 4 351 244 A1

| Starting AID | Request TID | Reserved | Feedback Type | Reserved | UL Target RSSI | Multiplexing Flag |
|---|---|---|---|---|---|---|
| Bits  12 | 4 | 5 | 4 | 7 | 7 | 1 |

FIG. 13

| Starting AID | Request TID | Reserv ed | Feedback Type | Reserved | UL Target RSSI | Multiplexing Flag |
|---|---|---|---|---|---|---|

Bits     12        8        1        4        7        7        1

| TID#0 | TID#1 | TID#2 | TID#3 | TID#4 | TID#5 | TID#6 | TID#7 |
|---|---|---|---|---|---|---|---|

Bits     1        1        1        1        1        1        1        1

FIG. 14

| Starting AID | Request AC | Reserved | Feedback Type | Reserved | UL Target RSSI | Multiplexing Flag |
|---|---|---|---|---|---|---|
| 12 | 2 | 7 | 4 | 7 | 7 | 1 |

Bits

FIG. 15

| Starting AID | Request Discard age | Feedback Type | Reserved | UL Target RSSI | Multiplexing Flag |
|---|---|---|---|---|---|
| Bits 12 | 9 | 4 | 7 | 7 | 1 |

FIG. 16

| Value | Description |
|-------|-------------|
| 0 | Resorce request |
| 1 | Resorce request (Low latency) |
| 2-15 | Description |

FIG. 17

| Value | Description |
|-------|-------------|
| 0 | Resorce request |
| 1 | Resorce request (middle Low latency) |
| 2 | Resorce request (high Low latency) |
| 3-15 | Description |

FIG. 18

| AID12 | PHY Version ID | UL Bandwidth Extension | Spatial Reuse 1 | Spatial Reuse 2 | Feedback Type | U-SIG Disregard And Validate | Reserved | Trigger Dependent User Info |
|---|---|---|---|---|---|---|---|---|
| | | | | | | | | |

Bits: 12   3   2   4   4   4   9   3   variable

FIG. 19

| Value | Description |
|-------|-------------|
| 0 | middle |
| 1 | high |
| 2-15 | Description |

FIG. 20

Special user info field

| AID12 | PHY Version ID | UL Bandwidth Extension | Spatial Reuse 1 | Spatial Reuse 2 | Feedback Type | U-SIG Disregard And Validate | Reserved | Trigger Dependent User Info |
|---|---|---|---|---|---|---|---|---|

Bits: 12     3     2     4     4     4     9     3     variable

User info field

| Starting AID | Request Discard age | Feedback Type | Reserved | UL Target RSSI | Multiplexing Flag |
|---|---|---|---|---|---|

Bits: 12     9     4     7     7     1

FIG. 21

BUFFER

| TID=0 | | X0 [byte] |
| TID=1 | | X1 [byte] |
| TID=2 | | X2 [byte] |
| TID=3 | | X3 [byte] |
| TID=4 | | X4 [byte] |
| TID=5 | | X5 [byte] |
| TID=6 | | X6 [byte] |
| TID=7 | | X7 [byte] |

FIG. 22

| Element ID | Length | Element ID Extension | Resource Request Buffer Threshold Exponent | Resource Request Buffer Threshold Exponent (Low latency) |
|---|---|---|---|---|

Octets:  1   1   1   1   1

FIG. 23

EP 4 351 244 A1

| Starting AID | Request TID | Reserv ed | Feedback Type | Starting RU_TONE_ SET_INDEX | Reserv ed | UL Target RSSI | Multiplexing Flag |
|---|---|---|---|---|---|---|---|
| 12 | 4 | 5 | 4 | 7 | 2 | 7 | 1 |

Bits

FIG. 24

| RU_TONE_SET_INDEX | 80 MHz | | 40 MHz | | 20 MHz | |
|---|---|---|---|---|---|---|
| | $X_{tone}$_NDPa if FEEDBACK_STATUS is 1 | $X_{tone}$_NDPa if FEEDBACK_STATUS is 0 | $X_{tone}$_NDPa if FEEDBACK_STATUS is 1 | $X_{tone}$_NDPa if FEEDBACK_STATUS is 0 | $X_{tone}$_NDPa if FEEDBACK_STATUS is 1 | $X_{tone}$_NDPa if FEEDBACK_STATUS is 0 |
| 1 | Use 20 MHz FEED-BACK_STA-TUS = 1 Subcarrier Indices – 384 | Use 20 MHz FEED-BACK_STA-TUS = 0 Subcarrier Indices – 384 | Use 20 MHz FEED-BACK_STA-TUS = 1 Subcarrier Indices – 128 | Use 20 MHz FEED-BACK_STA-TUS = 0 Subcarrier Indices – 128 | −113, −77, −41, 6, 42, 78 | −112, −76, −40, 7, 43, 79 |
| 2 | | | | | −111, −75, −39, 8, 44, 80 | −110, −74, −38, 9, 45, 81 |
| 3 | | | | | −109, −73, −37, 10, 46, 82 | −108, −72, −36, 11, 47, 83 |
| 4 | | | | | −107, −71, −35, 12, 48, 84 | −106, −70, −34, 13, 49, 85 |
| 5 | | | | | −105, −69, −33, 14, 50, 86 | −104, −68, −32, 15, 51, 87 |
| 6 | | | | | −103, −67, −31, 16, 52, 88 | −102, −66, −30, 17, 53, 89 |
| 7 | | | | | −101, −65, −29, 18, 54, 90 | −100, −64, −28, 19, 55, 91 |
| 8 | | | | | −99, −63, −27, 20, 56, 92 | −98, −62, −26, 21, 57, 93 |
| 9 | | | | | −97, −61, −25, 22, 58, 94 | −96, −60, −24, 23, 59, 95 |
| 10 | | | | | −95, −59, −23, 24, 60, 96 | −94, −58, −22, 25, 61, 97 |
| 11 | | | | | −93, −57, −21, 26, 62, 98 | −92, −56, −20, 27, 63, 99 |
| 12 | | | | | −91, −55, −19, 28, 64, 100 | −90, −54, −18, 29, 65, 101 |
| 13 | | | | | −89, −53, −17, 30, 66, 102 | −88, −52, −16, 31, 67, 103 |
| 14 | | | | | −87, −51, −15, 32, 68, 104 | −86, −50, −14, 33, 69, 105 |
| 15 | | | | | −85, −49, −13, 34, 70, 106 | −84, −48, −12, 35, 71, 107 |
| 16 | | | | | −83, −47, −11, 36, 72, 108 | −82, −46, −10, 37, 73, 109 |
| 17 | | | | | −81, −45, −9, 38, 74, 110 | −80, −44, −8, 39, 75, 111 |
| 18 | | | | | −79, −43, −7, 40, 76, 112 | −78, −42, −6, 41, 77, 113 |

Resource request

Starting
RU_TONE_SET_INDEX

Resource request
(Low latency)

FIG. 25

FIG. 26

FIG. 27

EP 4 351 244 A1

EP 4 351 244 A1

$$P_{HT\text{-}LTF} = \begin{bmatrix} 1 & -1 & 1 & 1 \\ 1 & 1 & -1 & 1 \\ 1 & 1 & 1 & -1 \\ -1 & 1 & 1 & 1 \end{bmatrix}$$

LATENCY REQUIREMENT "LOW"

LATENCY REQUIREMENT "HIGH"

FIG. 28

$$P_{HT\text{-}LTF} = \begin{bmatrix} 1 & -1 & 1 & 1 \\ 1 & 1 & -1 & 1 \\ 1 & 1 & 1 & -1 \\ -1 & 1 & 1 & 1 \end{bmatrix}$$

LATENCY REQUIREMENT "LOW"

LATENCY REQUIREMENT "HIGH"

FIG. 29

EP 4 351 244 A1

EP 4 351 244 A1

$$P_{6\times6} = \begin{bmatrix} 1 & -1 & 1 & 1 & 1 & -1 \\ 1 & -w^1 & w^2 & w^3 & w^4 & -w^5 \\ 1 & -w^2 & w^4 & w^6 & w^8 & -w^{10} \\ 1 & -w^3 & w^6 & w^9 & w^{12} & -w^{15} \\ 1 & -w^4 & w^8 & w^{12} & w^{16} & -w^{20} \\ 1 & -w^5 & w^{10} & w^{15} & w^{20} & -w^{25} \end{bmatrix}$$

LATENCY REQUIREMENT "LOW"

LATENCY REQUIREMENT "MIDDLE"

LATENCY REQUIREMENT "HIGH"

where

$$w = \exp(-j2\pi/6)$$

FIG. 30

$$P_{6\times6} = \begin{bmatrix} 1 & -1 & 1 & 1 & 1 & -1 \\ 1 & -w^1 & w^2 & w^3 & w^4 & -w^5 \\ 1 & -w^2 & w^4 & w^6 & w^8 & -w^{10} \\ 1 & -w^3 & w^6 & w^9 & w^{12} & -w^{15} \\ 1 & -w^4 & w^8 & w^{12} & w^{16} & -w^{20} \\ 1 & -w^5 & w^{10} & w^{15} & w^{20} & -w^{25} \end{bmatrix}$$

LATENCY REQUIREMENT "LOW"

LATENCY REQUIREMENT "HIGH" & BUFFER "LARGE"

LATENCY REQUIREMENT "HIGH" & BUFFER "SMALL"

where

$$w = \exp(-j2\pi/6)$$

FIG. 31

EP 4 351 244 A1

| RU_TONE_SET_INDEX | FEEDBACK_STATUS=1 | FEEDBACK_STATUS=0 | FEEDBACK_STATUS=1 (HIGH LATENCY REQUIREMENT) | FEEDBACK_STATUS=0 (HIGH LATENCY REQUIREMENT) |
|---|---|---|---|---|
| 1 | −113, −41, 42 | −112, −40, 43 | −77, 6,78 | −76, 7,79 |
| 2 | −111, −39, 44 | −110, −38, 45 | −75, 8,80 | −74, 9,81 |

FIG. 32

EP 4 351 244 A1

Negotiation Type = 2 or 3 → broadcast TWT IE

| ReqType (2B) | TWT (2B) | MinWakeDur (1B) | WakeInvM (2B) | Bcast TWT Info (2B) |
|---|---|---|---|---|

| Element ID (1B) | Length (1B) | Control (1B) | TWT Params Info |
|---|---|---|---|

Option a

| bit | 0 | 1 | 3 | 4 | 5 | 6 | 7 | 9 10 | 14 | 15 |
|---|---|---|---|---|---|---|---|---|---|---|
| | Request (1b) | SetupCmd (3b) | Trigger (1b) | Last (1b) | FlowType (1b) | Bcast Recom (3b) | WakeIntxExp (5b) | | | Rsvd (Protection for TWT) (1b) |

| bit | 0 | 1 | 2 | 3 | 4 | 5 | 6 | 7 |
|---|---|---|---|---|---|---|---|---|
| | NDP Paging (1b) | Responder PM Mode (1b) | Negotiation Type (2b) | | TWT Info Frm Disabled (1b) | Wake Dur Unit (1b) | Rsvd (2b) | |

Option c

| Val | Broadcast Recommendation |
|---|---|
| 0 | No constraints on traffic |
| 1 | Traffic limits to status/feedback solicitation, no UORA. |
| 2 | Traffic limits to status/feedback solicitation, at least one UORA. |
| 3 | TIM or FILS Discovery w/TIM + any other traffic |
| 4-7 | Reserved |

Option b:
Use value 4

FIG. 33

| Traffic Info Control | Restricted TWT DL TID Bitmap | Restricted TWT UL TID Bitmap |
|---|---|---|
| | | |

Octets:     1         1         1

FIG. 34

FIG. 35

EP 4 351 244 A1

BROADCAST TWT
RECOMMENDATION IS
NOT LOW LATENCY

TWT service period

BROADCAST TWT
RECOMMENDATION IS
LOW LATENCY

Restricted TWT service period

AP

| Beacon | TWT → | NFRP | Trigger | S363 | A C K | S365 | Beacon | TWT → | NFRP | Trigger | S373 | A C K | S375 |

STA

S361

S362

N D P

TB-PPDU

S364

S371

S372

N D P

TB-PPDU

S374

SET BUFFER_STATUS = 1
WHEN DATA IS HELD
IRRESPECTIVE OF
LATENCY REQUIREMENT

SET BUFFER_STATUS = 1
WHEN DATA WITH HIGH LATENCY
REQUIREMENT IS HELD

FIG. 36

## INTERNATIONAL SEARCH REPORT

| International application No. |
|---|
| **PCT/JP2022/010003** |

**A.     CLASSIFICATION OF SUBJECT MATTER**

*H04W 72/04*(2009.01)i; *H04W 72/12*(2009.01)i; *H04W 84/12*(2009.01)i
FI:     H04W72/04 136; H04W84/12; H04W72/12 150; H04W72/04 132

According to International Patent Classification (IPC) or to both national classification and IPC

**B.     FIELDS SEARCHED**

Minimum documentation searched (classification system followed by classification symbols)

H04W72/04; H04W72/12; H04W84/12

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.     DOCUMENTS CONSIDERED TO BE RELEVANT**

| Category* | Citation of document, with indication, where appropriate, of the relevant passages | Relevant to claim No. |
|---|---|---|
| X | WO 2019/167376 A1 (CANON KK) 06 September 2019 (2019-09-06) abstract, claim 1, paragraphs [0021]-[0065], fig. 3-10 | 1, 2, 4, 7, 10-14 |
| Y | | 3, 5, 6 |
| A | | 8, 9 |
| Y | JP 2019-536334 A (CANON KK) 12 December 2019 (2019-12-12) abstract, paragraphs [0111]-[0141], fig. 2 | 3, 5, 6 |

☐ Further documents are listed in the continuation of Box C.        ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **06 June 2022** | **14 June 2022** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 **Japan** | |
| | Telephone No. |

Form PCT/ISA/210 (second sheet) (January 2015)

**INTERNATIONAL SEARCH REPORT**
**Information on patent family members**

International application No.

**PCT/JP2022/010003**

| Patent document cited in search report | Publication date (day/month/year) | Patent family member(s) | Publication date (day/month/year) |
|---|---|---|---|
| WO 2019/167376 A1 | 06 September 2019 | JP 2019-153828 A | |
| JP 2019-536334 A | 12 December 2019 | US 2019/0274171 A1 abstract, paragraph [0148]-[0184], fig. 2 GB 2555455 A WO 2018/078101 A1 CN 109923930 A KR 10-2019-0073455 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021089176 A